# EUROPEAN PATENT SPECIFICATION

(11) **EP 0 281 776 B1**
(45) Date of publication and mention of the grant of the patent: **26.05.1993**
(21) Application number: 88101884.0
(22) Date of filing: 09.02.1988
(51) Int. Cl.: B29C 49/22, B32B 27/08

(54) **Multilayered tube for draw molding and multilayered container made therefrom**
Mehrschichtiges Rohr für das Formziehen und daraus hergestellter mehrschichtiger Behälter
Tube multi-couche pour le moulage par étirage et récipient multi-couche obtenu à partir de ce tube

(30) Priority: 09.02.1987 JP 28877/87
(43) Date of publication of application: 14.09.1988
(73) Proprietor: KURARAY CO., LTD., Kurashiki-City Okayama Prefecture 710 (JP)
(72) Inventor: Kawai, Syuji, Kurashiki-City (JP); Anzaii, Seio, Okayama-City (JP); Ishii, Toshinori, Asakuchi-gun Okayama Pref. (JP); Shirano, Kenji, Kurashiki-City (JP); Shimamura, Kunihiko, Okayama-City (JP); Kanemitsu, Toshimasa, Fukuyama-City (JP); Matsumura, Keiji, Kurashiki-City (JP)
(74) Representative: VOSSIUS & PARTNER

(56) References cited:
- EP-A- 0 117 622
- EP-A- 0 118 227
- EP-A- 0 160 984

## Description

The present invention relates to a multilayered tube comprising a saturated polyester ( hereinafter referred to as PES ) as the inner and the outer layers, a saponified product of ethylene-vinyl acetate copolymer ( hereinafter referred to as EVOH ) as the intermediate layer, and an adhesive resin (hereinafter referred to as TR ) layer between the PES layers and the EVOH layer; and a multilayered container made from the tube; as well as methods of producing the tube and the container.

EP-A-0 117 622 and EP-A-0 118 227 disclose a method and a structure being directed to plastic laminates comprising an ethylene terephthalate or butylene terephthalate units based polyester layer and a gas barrier layer containing an olefin - vinyl alcohol copolymer. These two layers are laminated together by a thermoplastic adhesive resin layer. EP-A-0 118 227 mentions the use of a saponified ethylene-vinyl acetate copolymer as an olefin - vinyl alcohol copolymer.

PES, represented by polyethylene terephthalate ( hereinafter referred to as PET ) is, because of its high transparency, heat resistance, mechanical properties, and so on, widely used not only for fibers and films but also for containers for beverages and foods or as films for food packaging. In the case where PES is used for containers for foods or films for food packaging, it is to some extent suitable for preserving foods as it possesses certain gas barrier properties. However superior gas barrier properties are desired depending on the type of foods or beverages to be filled or packed therein. Attempts have therefore been made to laminate the EVOH, resin, which has a higher gas barrier property onto PES to obtain tubes, blown bottles and films having multilayered structures. For example, JP-A-108162/1978, 77144/1981, 128516/1982, US-A-4 504 531 and JP-A-199237/1984 disclose tubes and blown bottles made from laminates of the two resins. However, when a composite of PES and EVOH is formed into a biaxially drawn multilayered container, the container (bottle) shows abnormal nonuniformity giving the impression of streaks which render the bottle unsatisfactory. Figure 10 is an elevation of such a bottle, showing streaky nonuniformities. This streakiness, S (hereinafter referred to simply as streaks), markedly lowers the commercial value of the bottle, and the bottle cannot stand comparison with monolayered bottles of PET which are sold commercially.

It is an object of the invention to provide a multilayered tube and a method of producing a multilayered container, both having a better quality, in particular, to avoid the impression of streaks therein.

The present inventors thought that such streaks of the blown bottles cannot be fully eliminated by improving the uniformity in the thickness of the tube or the EVOH layer or each layer, and that the streaks are caused by the poor drawability of the EVOH used as the gas barrier resin. They have carried out a series of studies centering on improving the blow molding conditions such as blow ratio, blow rate and blow temperature and various manufacturing conditions. However, they found that drawability can only be improved to a certain degree, by improving the blow conditions or various manufacturing conditions. The desired bottles free from streaks were difficult to obtain.

The present inventors made further intensive studies on the streaks problem and found unexpectedly that the main factor causing the streaks are local minute non - uniformities in the thickness of small regions of the EVOH layer in the tube. More specifically, local minute non - uniformities in the thickness (roughness) of the EVOH layer in the tube cause bigger irregularities in the EVOH layer and bottle wall thickness in the course of biaxial draw blowing. The local minute nonuniformities in thickness are continuously generated in flow direction at the junction in the die, when the tube is molded and appears as continuous "streaks" along the machine direction in the article. It is indispensable to eliminate such local minute unevenness.

The present invention has been achieved based on the above findings, and provides a multilayered tube for draw molding, which comprises a saturated polyester as the inner and outer layers, a saponified product of an ethylene-vinyl acetate copolymer having a ethylene content of 20 to 55 mol% and a saponification degree of the vinyl acetate component of at least 96 mol%, and an adhesive resin layer interposed between the saturated polyester layer and the saponified product of the ethylene - vinyl acetate copolymer layer; which satisfies the conditions of the following formulae I -① to I ③: 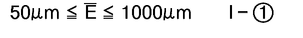 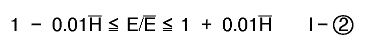 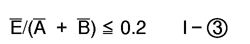 wherein,
E is the wall thickness at any point of the layer of the saponified product of the ethylene-vinyl acetate copolymer(am)
E is the average wall thickness of the layer of the saponified product of the ethylene - vinyl acetate copolymer (µm)
H is the average outer diameter of the tube (mm)
A̅ is the average wall thickness of the inner layer of the saturated polyester (µm)
B is the average wall thickness of the outer layer of the saturated polyester (µm); and in which the layer of the saponified product of the ethylene-vinyl acetate copolymer substantially satisfies the following formula II: 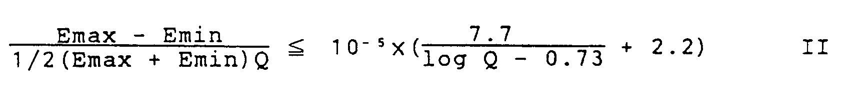 wherein:
Emin is the minimum wall thickness (µm) of the layer of the saponified product of the ethylene - vinyl acetate copolymer determined in the cross section perpendicular to the direction of the tube length, between any two points Pₙ and Pₙ₊₁, which have a circumferential distance Q = 100 to 500 µm from each other, measured at the outer surface of the layer;
Emax is the maximum wall thickness (µm) in the above specified region between Pₙ and Pₙ₊₁.
   Figure 1 shows the thickness distribution in the circumferential direction of the EVOH layer in the cross section of a bottle
      { point A is the maximum thickness (tmax); point B is the minimum thickness (tmin); the distance between tmax and tmin is (L) }.
   The abscissa represents the circumferential distance and the ordinate represents the thickness of the EVOH layer.
   Figure 2 is a diagram showing local minute nonuniformities in the thickness of the EVOH layer {Emax and Emin are the maximum thickness and the minimum thickness respectively between points Pₙ and Pₙ₊ᵢ the circumferential distance between them being Q (µm).
   Figure 3 shows a curve delimiting the acceptable region ( hatched ) for the local minute nonuniformity in the thickness of the tube according to the present invention, which is expressed by the following equation: 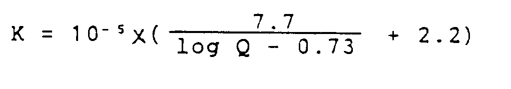 wherein the abscissa represents Q and the ordinate represents K.
   Figure 4 is a perspective view of the EVOH layer of the tube.
   Figure 5 shows the manufacturing process for the tube according to the present invention.
   Figure 6 - (1) is a sectional view of a co - extrusion die used in manufacturing the tube according to the present invention, and Figure 6 - (2) is a perspective view of a mandrel having a spiral structure.
   Figures 7 - (1) to (4) are diagrams of other co - extrusion dies used in manufacturing the tube of the present invention.
   Figure 8 shows a sectional view of the tube of Example 1.
   Figure 9 is an elevation of the biaxially drawn blown bottle having no streaks obtained from the tube of Example 1.
   Figure 10 is an elevation of the biaxially drawn blown bottle having streaks obtained from the tube of Comparative Example 1.
   Figure 11 shows the thickness distribution of the EVOH layer of the bottle prepared in Example 1.
   Figure 12 shows the thickness distribution of the EVOH layer of the bottle prepared in Comparative Example 1. In Figures 11 and 12 the abscissa represents the circumferential distance in the cross section of the bottle and the ordinate represents the thickness of the EVOH layer.
   Figure 13 - (1) is a diagram of a co - extrusion die used in manufacturing the tube according to the present invention when TR is introduced; and (2) when both TR and EVOH are introduced.

What is essential in the present invention is that the EVOH layer as the intermediate layer of a multilayered tube should satisfy the above equation II. This means that any local nonuniformity in thickness must be eliminated from the minute regions.
The value of 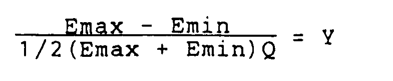 greatly influences the appearance of streaks in the bottles. When Y exceeds 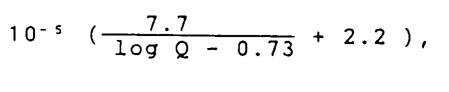 the local minute nonuniformity in thickness becomes greater, which, as the EVOH layer is drawn, will cause nonuniformity which in turn will result in streaks.

The present inventors have carried out a number of basic experiments and molding tests. As a result, they found that for the purpose of obtaining a biaxially drawn blown bottle of PES/TR/EVOH/TR/PES, that is a bottle with five layers of three different materials, which is substantially free from streaks, it is not sufficient to simply improve the structure of the multilayered tube by controlling the thickness of the EVOH layer and eliminating thickness irregularities in the TR layer. Rather it is necessary to eliminate local minute variations in the thickness of the EVOH layer in the tube, that is, the condition (II) must be fulfilled. The problem of streaks caused by the poor drawability of EVOH is usually not encountered in other multilayered structures comprising PES, polyethylene, polypropyrene, nylon, etc., but no EVOH.

In the case of PET bottles or PET multilayered bottles, such minute local variations in thickness will not, thanks to the very high drawability of the PET resin, entail a thickness nonuniformity of the PET layer and thus the bottles will be free from streaks. However, EVOH resin is very inferior to the PET resin, in drawability and in particular in uniform drawability. Therefore, even a small variation in thickness will have as a result that thin spots will tend to be drawn to a greater extent while thick portions will be drawn to a lesser extent, rendering the EVOH layer nonuniform. Consequently, the bottle obtained therefrom will show great variations in thickness. As such a minute nonuniformity in thickness is the consequence of a nonuniformity in the flow which continuously happens in the course of tube molding and is continuously produced in the direction of tube flow (machine direction), it appears enlarged on the bottle body as a streaky thickness irregularity which extends continuously in the machine direction. This irregularity in the drawn EVOH layer also influences the drawing of the TR layer and the PET layer. A great variation, i.e. poorly drawn portions in the EVOH layer,will render the TR and PET layers poorly drawn as well and will thus be enlarged in the whole wall of the bottle, showing up as even bigger nonuniformity in light refractivity and resulting in a streaky appearance.

In the present invention, the above condition II is substantially satisfied, if all or almost all points in the EVOH layer in the cross section of the tube satisfy the condition II. However, minute local thickness irregularities (not satisfying the condition II) not causing the appearance of streaks upon drawing may be allowed to exist. In this case, however, it is not preferred that two points of two cross sections of the tube, which are 1 to 2 cm apart from each other in the longitudinal direction of the tube, do not simultaneously satisfy the condition II, since the points will form a streak upon drawing. If only one of these points of the EVOH layer does not satisfy the condition II, a streak may be avoided.

Emax and Emin are determined by cutting the tube at two points which are 1 to 2 cm apart from each other in the longitudinal direction and by measuring the maximum and minimum thickness within a range Q of 100 to 500 µm in the two cross sections. Tubes satisfying the condition II in both of the cross sections, as well as tubes in which one of the two sections contains a point not satisfying the condition II while the other section satisfies the condition II are included in the present invention. However tubes, where in one cross section there is a point which does not satisfy the condition II and in the other cross section there is a point linked lineally with the first point which does not satisfy the condition II either, are excluded from the present invention, as they will form streaks upon drawing.

The above will be elucidated in more detail hereinbelow with reference to an example.

In a multilayered tube having H = 30 mm and an average thickness of the EVOH layer E = 300 am, the maximum allowable range for the thickness irregularity of the EVOH layer, calculated from the inequality I -② . 1 - 0.01 H ≦ E/E̅ ≦ 1 + 0.01H̅., is 210 - 390 µm.

While the total range of thickness irregularity is as large as ± 90 am, the approximate thickness gradient is, when regarding the tube wall as a plane, calculated for the minimum value as follows:
(390 u.m - 210 µm)/15 x π x 10³ (semicircle of tube) = 0.0038

Suppose the above thickness nonuniformity varies smoothly along the entire circumference in the allowable range, the local thickness difference between any two points on the circumference, which are for instance Q = 500 µm apart from each other, is 500 µm x 0.0038 = about 2 µm and thus fully satisfies the condition of local minute thickness nonuniformity: 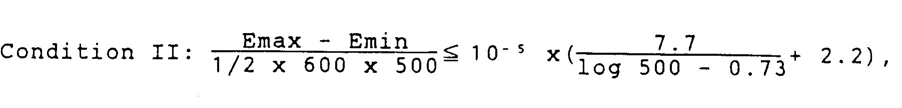 that is, satisfies Emax - Emin about 9 ym. Therefore the biaxially drawn blown bottles obtained from the tube do not form any streaks.

The result would however be quite different in the case of an EVOH layer of a remarkable uniform thickness having a total thickness range of 290 µm to 310 µm, which is a range much narrower than that of the preceding example, if the local thickness difference between two points, which are not less than 500 µm apart from each other, exceeds the allowable limit of Condition II:
(Emax - Emin) = about 9 µm, e.g. with Q being 500 µm and (Emax - Emin)being 10 µm. The biaxially drawn blow bottles obtained from this tube will have streaks and an unappealing appearance. Further, in the case where the thickness difference between two points which are 100 µm (Q) apart from each other, exceeds the allowable limit of Condition II:
(Emax - Emin) = 2.5 µm, e.g. with Q being 100 µm, and (Emax - Emin) being about 3 µm, streaks will also be formed.

The above facts show that the allowable range of local minute thickness nonuniformity of an EVOH layer varies greatly depending on the size of the corresponding local minute segment. Though drawing behavior is not completely understood, variations in the thickness of local portions probably have a strong influence on that behavior among other factors relative to the wall thickness of the EVOH layer.

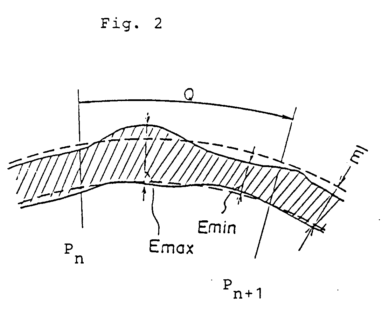

Figure 2 is a diagrammatical view of the cross section of the tube according to the present invention showing local minute nonuniformity in the thickness of the EVOH layer.

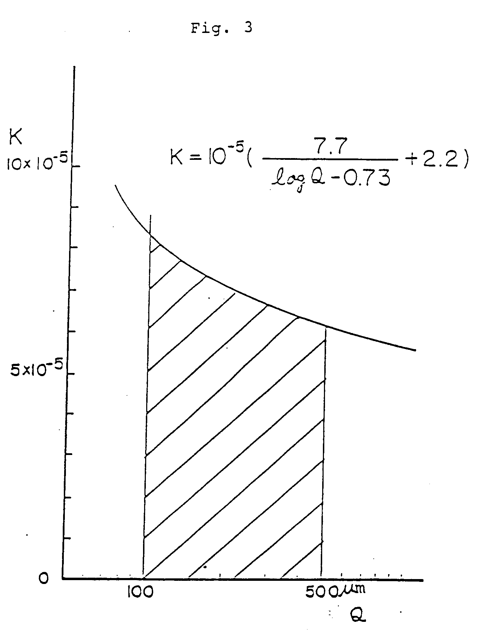

Figure 3 shows the acceptable region ( hatched ) for the local minute nonuniformity in thickness of the tube according to the present invention, wherein the abscissa represents Q(um) and the ordinate repre - sents:

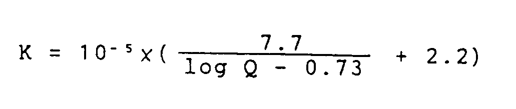

The graph of Figure 3 shows that the variation in the acceptable range of thickness nonuniformity forms a gradient which is a function of the length Q of the local minute segment. According to Figure 3 the acceptable value of the thickness nonuniformity (gradient K) becomes smaller as the minute region Q becomes longer. This means that even a gentle slope will increase the drawing nonuniformity which cases streaks. The inequality II is for a range Q = 100 to 500 µm. However a similar tendency is also found beyond this range. Although the gradient element is the thickness variation is an important factor, an irregularity which, while satisfying the condition II in a minute region of substantially Q < 100 µm, would cause streak formation, is never produced in the actual molding practice as judged from interfacial characteristics of the polymer flow. Therefore it is sufficient to fix the lower limit of Q to be 100 µm. A similar correlation exists also above Q = 500 µn. For instance even when Q is as great as 2000 µm, the gradient does not show a big variation.

It is therefore sufficient to substantially observe a region of 500µm for the purpose of checking. Further when the magnification or analytical performance of the microscope is insufficient, a rough measurement in a range of about Q = 500µm and checking the gradient will be effective in practice, especially for process control and the like. Accordingly,for an EVOH layer of a multilayered tube molded at a steady rate, those local thickness irregularities observed in a region Q < 100µm are well checked by observing a region Q 100tim; and also an irregularity above Q = 500µm can be observed nearly at Q = 500µm.

The above is a result of a study based on a number of experiments. Hereinbelow a simple and easy example of such an experiment will be given.

The total range of thickness and local minute thickness nonuniformities of an EVOH layer is measured following the procedures below.

The total range of thickness and local minute thickness nonuniformities of an EVOH layer following the procedures below.
1) Take a sample 100 to 200 mm long from a continuously molded tube,
2) Slice the sample at several spots with a sharp cutter or the like to specimens 1 to 2 cm long, while paying attention not to cause delamination and deflection between the layers of the multilayer structure, and also to minimize stress at the cut surface,
3) Flatten the cut surfaces with a plastic grinder or a sharp knife, etc. so that the cross sections are clear, and
4) Examine and measure each sample with a microscope at about 40 to 300 magnification.

Though the TR layer and the EVOH are relatively transparent the boundary lines can be seen from differences in refractivity and color shade to make possible measurement of relatively larger irregularities. However, measurement of minute nonuniformities of less than a few µm, i.e. below a range Q = 100 to 200µm is rather difficult and requires a high - precision observation of cross sections, or in some cases a discernment by coloration difference using a dyestuff. Also effective is a method, experimentally, of coloring each polymer beforehand to distinguish them clearly from each other for an easier observation. It happens that a sample rejected by observation of the cross section may be an accidental defective due to contamination with foreign substances, etc., which will not cause a streak. In this case it is necessary to do rechecking by further observing residual samples to see if it is really a continuous minute nonuniformity in thickness.

The present inventors have also studied how to take out the EVOH layer without damaging it from a multilayered tube, and have found an effective method to measure the thickness, thus making it possible to have the EVOH layer only be observed with the naked eye or with a special microscope as well as subjected to measurement with a thickness tester. That is, in the case where the softening point of the TR layer is lower than those of PES and EVOH, the following method is effective as well as simple and easy.
1) Heat a sliced multilayered tube in a heating furnace, etc., to a temperature below the melting points of the PES resin and the EVOH resin, and above that of the TR resin, to soften the TR layer
2) Remove the EVOH layer by sliding the PES layer from the EVOH layer in the longitudinal direction,
3) Peel off the adhering TR layer by using, where necessary, a special delamination solvent (a mixture containing acetone, etc.) to obtain the pure EVOH layer, and
4) Use the EVOH layer for measurement.

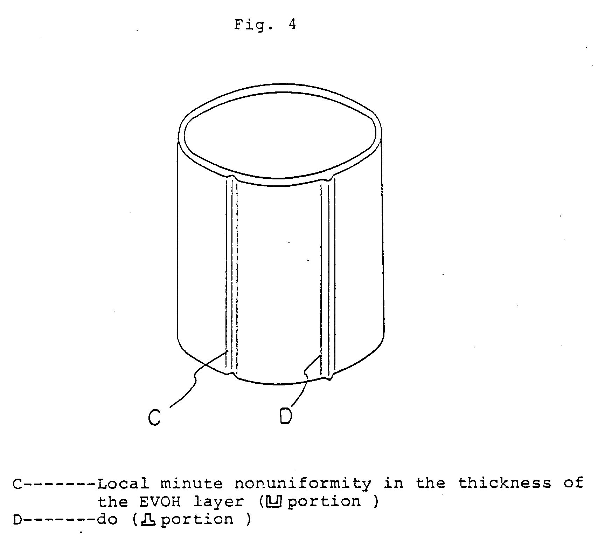

Figure 4 shows a perspective view of the EVOH layer obtained from the tube. Most simply, the thus obtained EVOH layer is held into the light and examined for local minute nonuniformities C (cavity) and D (projection) of a few µm in thickness which appear as thin streaks; by such sensory evaluation or comparison with the naked eye it is in most cases possible to judge whether the specimen is acceptable or not.

Another effective method is checking and rough measurement of the thickness nonuniformities by examining with a microscope a cross section in the circumferential direction (direction perpendicular to the tube axis) of the tube.

Another important point in the present invention is that the multilayered tube must satisfy the afore - described inequalities I - ①to I - ③.

I - ①specifies the thickness range of the EVOH layer. It is true that when the EVOH layer is made thinner, the layer is drawn more uniformly forming less streaks. However, an improvement in the barrier property which should be the main reason for using a multilayered material cannot be achieved, if the EVOH layer is made too thin. Furthermore, if the EVOH layer is less than 50 µm, it is very difficult to maintain a continuous molding of a multilayered tube having a uniform EVOH layer of small thickness biases for a long time. Consequently, the thickness should be 50 µm or more, preferably 150 µm or more. On the other hand, as the EVOH layer is made thicker, the poor drawability of EVOH becomes a problem and irregularities upon drawing will increase. As a result streaks will become more prominent and the tube will be more difficult to cool. This in turn will result in a whitening of the tube caused by crystallization. Therefore, it is preferred that the thickness be not more than 1000 µm and more preferably: 150 µm < E ≦ 700tim. From the viewpoint of the gas barrier property required for bottles for commercially available refreshing drinks a thickness of 700 µm (about 50 µm after drawing) or below will be sufficient.

I - ②govern the allowable variation in the thickness of the EVOH layer. Prevention of biased thickness of the EVOH layer is very difficult because of the poor flow characteristics of the EVOH. However since a biased thickness directly causes nonuniformity of drawing and generation of streaks, a variety of studies have been made on how to fix acceptable limits of biased thickness. As a result therefrom, it was found that the acceptable limits of biased thickness can, in relationship with the tube diameter (H), be well specified to be:
1 - 0.01 H̅ ≦ E/E̅ ≦ 1 + 0.01H̅, more preferably:
1 - 0.008H̅ ≦ E/E̅ ≦ 1 + ₀.₀₀₈H̅.

I - @ refers to the ratio of the EVOH layer to the PES layers. While it is not deemed to be so important a factor in a general multilayered tube, this ratio is an important condition for obtaining a streakless bottle by uniformly drawing a multilayered tube containing an EVOH layer. PES layers have an important function in the uniform drawing of EVOH which is by itself of poor drawability, which is helped by their co-drawing. Where the ratio of the PES layers is small, the PES layers themselves will be affected by the poor drawability of the EVOH layer, and the bottle will show greater irregularities in thickness because of nonuniform drawing which will make it difficult to avoid streaks. For this reason it is preferred that E/( A + B ) be 0.2 or less , more preferably 0.15 or less.

Furthermore, it is preferred that the multilayered tube according to the present invention should satisfy the following conditions IV - ① to IV - ⑬ : 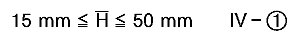 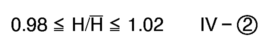 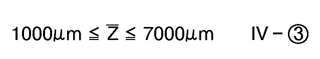 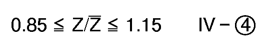 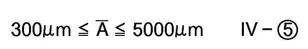 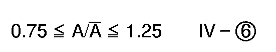 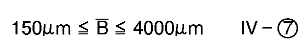 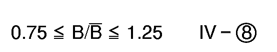 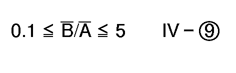 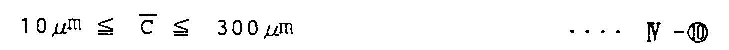 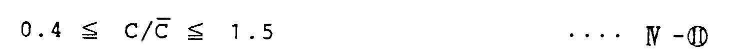 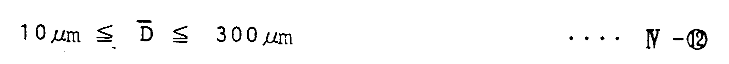 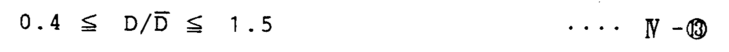 wherein:
H is the outer diameter of the tube (mm)
Z is the wall thickness of the tube (µm)
Z is the average wall thickness of the tube (µm)
A is the wall thickness of the inner layer of saturated polyester (µm)
A is the average wall thickness of the inner layer of saturated polyester (µm)
B is the wall thickness of the outer layer of saturated polyester (µm)
B is the average wall thickness of the outer layer of saturated polyester (µm)
C is the wall thickness of the inner layer of the adhesive resin (µm)
C is the average wall thickness of the inner layer of the adhesive resin (µm)
D is the wall thickness of the outer layer of the adhesive resin (µm)
D is the average wall thickness of the outer layer of the adhesive resin (µm)

The above IV - ① to IV - ⑬ are preferred conditions for the multilayered tube used for draw molding according to the present invention.
IV - ① specifies the size of the multilayered structure of this invention, which is preferably in the range from 15 to 50 mm for the following reasons: With a multilayered tube having an outer diameter of 15 mm or smaller, a high-thickness molding is difficult to carry out. There are restrictions on the caliber and body diameter of the bottle resulting from limitations in the drawing ratio of the body. Also, if the ratio (surface area of bottle)/(volume of bottle) is too high it will adversely affect the barrier effect. Therefore, a diameter of 15 mm or higher is preferred. A multilayered tube having an outer diameter of 50 mm or greater, involves several drawbacks including an inevitable enlargement of the body diameter due to a minimum required drawing ratio. This requires higher pressure resistance and necessitates a thicker wall, and gives rise to restrictions on the bottle caliber by the tube diameter. Consequently, the preparation of preforms is difficult.
IV - ② specifies the deformation ratio of the tube expressed as the tolerance of the outer diameter of the tube. When the tolerance is too large, the following troubles will occur:
   During the preparation of preforms (preparation of mouth and bottom from a tube) : nonuniform pressing of the preforms, bad molding of the bottom, disorder of mouth shape, difficulty in demounting from the mold,
   In blow molding: nonuniform heating causing not only deformation and irregularities in the thickness of the bottle, but as a result thereof also an increase in the streaks on the bottle. It is therefore required that the tolerance of the outer diameter be ± 2 % or below, preferably ± 1 % or below.
IV - @ specifies the range of the wall thickness of the tube. A thin wall of 1000µm or thinner is difficult to prepare by multilayer molding on account of irregular thickness, deformation of the tube, and the like. Moreover in such a case as a bottle which has to withstand pressure, where in general a drawing ratio of 5 to 15 times is applied, the wall thickness becomes thin and so liable to deform from or damage by an external force as to make the bottle unsuitable for use. On the other hand a thick wall of 7000µm or thicker will make worse the heat transfer, and cause whitening phenomena to occur at portions of EVOH layer or PES layer due to crystallization, thus rendering it difficult to obtain a bottle having a transparent appearance. A more preferred range is 1500µm < Z ≦ 6000µm.
IV - @ specifies the tolerance of the thickness of the entire tube wall. When the thickness is biased to a great degree, the nonuniformities in drawing and heating during the drawing will increase the bias so as to show up large biased wall portions. These portions will cause the deformation of the tube, the deformation of the bottle, resulting in poor strength, poor barrier property, etc. Consequently, the bottle will not be satisfactory. Besides, the nonuniformity in drawing will add to increase streaks, and the biased thickness of the whole wall affects the quality of preform making. Accordingly the whole wall thickness bias should be ± 15 % or below, preferably ± 10 % or below.
IV - ⑤ specifies the range of wall thickness of the inner PES layer. In the case where the wall thickness of the inner layer is 300µm or below, not only molding of the tube becomes difficult. Since the EVOH layer is placed closer to the inside of the bottle, when used as a bottle for water-containing beverages such as beverages containing carbon dioxide gas, the water content of the EVOH becomes higher, whereby the barrier property markedly decreases and is rendered insufficient. Besides, if the EVOH layer slides towards the inside because of a thinner inner layer the external cooling effect at the time the tube is subjected to sizing cooling will be lower resulting in a whitening due to crystallization. Furthermore, at the time of preform molding, disorders of the inner layer occur if the inner layer is too thin and the preparation of a good preform becomes thus difficult.
   Therefore, the wall thickness of the inner PES layer is preferably 300µm or above, more preferably 500µm or above. On the other hand, too thick a wall of 5000µm or thicker will involve problems such as increased dissolution of the inner PES layer by the carbon dioxide gas contained in a carbon dioxide gas beverage, lower resistance to the internal gas pressure which in turn causes delamination at the adhesive resin layer, and so on. Therefore, the wall thickness of the inner PES layer is not more than 5000µm, more preferably not more than 4000 µm.
IV - @ specifies the tolerances for the thickness of the inner PES layer. Since too high a variation causes nonuniformity in the gas barrier property, and since a good balance is required for good preforming and good blow molding, as in cases of inequalities IV - ② and IV - ④, the tolerance is ± 25 %, preferably ± 20 %.
IV - ⑦ specifies the range of the thickness of the outer PES layer. Although molding is possible where the outer layer is thinner than the inner layer, a layer of 150 µm or less is difficult to mold. Furthermore, too thin an outer PES layer will, as in the case of a pressure bottle such as the one for carbonate beverages, pose the problem of delamination in the intermediate EVOH layer caused by the stress generated in the adhesive resin layer. On the other hand, a construction comprising a PES layer more than 4000µm thick will, though the molding is possible, shift the EVOH layer inwardly, that is, to the high - moisture side ,resulting in reduced barrier properties and external cooling effect of the EVOH layer.
IV - ⑧ specifies tolerances for the wall thickness of the outer PES layer to be ± 25 %, more preferably ± 20 %, to ensure a good balance for achieving good preforming and good bottle molding, as in IV - ⑥.
IV - ⑨ specifies the ratio of the wall thickness of the inner PES layer and the outer PES layer. In other words, the ratio stands for a construction showing the position of the EVOH in the tube wall, and is, as explained in IV - ⑤ and IV - ⑦, a very important factor in tube and bottle molding and, particularly for bottle performance. In the case where the EVOH layer is shifted outwardly, the tube and B/A is made smaller; when the tube is later processed into a gas barrier container for water - containing beverages such as carbonated drinks, decrease in the barrier property will be avoided to some extent. However since the inner gas pressure to which the EVOH layer is exposed also acts upon the thin outer PES layer, the stress in the TR layer between the inner and outer layers of PES becomes so great as to produce a delamination between the EVOH layer and TR layer. On the other hand, where the EVOH layer is shifted inwardly and B/A is made larger, which is preferred from the viewpoint of delamination, the EVOH layer gets closer to the liquid contained, i.e. to high - moisture area, whereby it suffers a loss in its barrier property. Accordingly, it is necessary to determine the most adequate construction taking into consideration the kind of content the container is to hold and the required performances, such as pressure resistance, gas barrier property, etc. Generally speaking, while it is unavoidable that the barrier property decreases in the presence of moisture, the delamination problem can be solved by selecting the bond strength of TR. Therefore it is recommended that the EVOH layer be shifted a little to the outside of its intermediate layer position. Besides, when the wall thickness ratio B/A of the inner and outer PES layers is too high or too low, a bias or nonuniformity in thickness of the thin PES layer forms. The local nonuniformities in thickness of the EVOH layer become greater and will cause streaks, and disorders (disorders in the thinner PES layer) will appear at the mouth in preform molding and at the bottom (e.g. bad junction due to disorders in a thinner PES layer). Accordingly, the construction ratio is preferably 0.1 ≦ B̅/A̅ ≦ 5, more preferably 0.25 ≦ B̅/A̅ ≦ 2.5.
IV - ⑩ to IV - ⑬ are conditions of accuracy of wall thickness and thickness bias of the TR layer. TR is a layer bonding the PES layers with the EVOH layer and is of particular importance in preparing a biaxially drawn container from a multilayered tube. The TR layer must satisfy the following conditions:
   (i) In tube molding, delamination of the tube should be prevented by relaxing stress such as heat shrinkage caused by a difference in the cooling degree between the PES layers.
   (ii) In the preparation of preforms, delamination of the tube caused by external forces exerted during tube cutting, and others should be prevented.
   (iii) When preparing preforms, nothing unusual such as unusual melting or bad fusion at the time of heating the mouth and bottom of the bottle, must happen.
   (iv) In blow molding, any shearing between the PES layers and the EVOH layer should be minimized so that the EVOH layer can be co-drawn uniformly with the PES layers, and the temperature, viscosity or Young's modulus should be kept so high as not to cause a delamination.
   (v) No delamination should occur because of deformation of the bottle by internal pressure or by external force.
   (vi) The bottle obtained should satisfy other conditions when used (temperature, dropping).

For obtaining a streakless bottle, the condition (iv), that is of TR being capable of allowing the EVOH layer to be uniformly drawn is the most important one. Therefore, an adhesive resin layer is not simply a layer to be interposed between the PES layer and the EVOH layer, but must satisfy the above conditions. Thus the thickness of the inner and outer layers, C and D are each 10 µm to 300 µm, preferably 30 µm to 100 µm. In the case where the thicknesses of the TR layers in the tube, C and D are less than 10 µm, the TR layer tends to delaminate from the EVOH layer owing to a difference in the shrinkage stress on cooling in the tube molding process or to external stress on tube cutting, or to a deformation stress due to internal gas pressure of the bottle.

On the other hand, if the thickness exceeds 300 µm, the bond between the PES layer and the EVOH layer will become less tight in the course of blow molding. Consequently, the gripping effect is lowered whereby a shearing is produced, so that it will not be possible to eliminate a nonuniformity in drawing the EVOH layer, the drawability of which is poor and streaks will readily form. Besides, if the TR layer is thicker than required, the costs will only be higher. The thickness is most preferably 30 µm to 100 µm. The thickness biases of the TR layer C/C and DID are preferably 0.4 to 1.5, more preferably 0.7 to 1.3, When C/C or DID is lower than 0.4 or higher than 1.5, drawing will be nonuniform causing delamination of thin portions or streaks due to uneven drawing. The closer C/C and DID are to 1, the less nonuniform drawing can be achieved to prevent streaks.

The average wall thickness and the average outer diameter of each layer is I - ① to I - ③ and IV - ⑩ to IV - ⑬ are the average values at the cross section ( circumpherential direction of tube ) of a multilayered tube cut roughly perpendicular to the longitudinal direction at two points 1 to 2 cm apart from each other in the longitudinal direction, and are calculated from areas determined by integration method. The wall thickness and the outer diameter of the tube are any wall thickness and any outer diameter at the above two sections.

A description is made hereinbelow of a method of manufacturing the multilayered tube of this invention, which comprises PES layers as the inner and outer layers, an EVOH layer as an intermediate layer and TR layers interposed between the PES layers and the EVOH layer.

In this manufacturing method, it is an important condition to keep within a specified range the relationship between the viscosities of each molten polymer resin in the die of the coextrusion equipment. Since the proper temperature for molding each single resin varies greatly from one to another, it is not enough to select the resin viscosity according to the proper molding temperature, but the viscosities have to be selected taking into account any temperature change inside the die.

The present inventors have found it best to specify viscosities at 5 ° C above the melting point of the PES resin which as the highest melting point among PES, EVOH and TR, that is, to specify the viscosity index of any polymers of PES resin, EVOH resin and TR resin at a temperature close to the melting point of PES (melting point of PES + 5 ° C).

More precisely, it has been found to be important to select a range of melt index (MI) values measured at the melting point of PES { MP(PES) + + 5 ° C for each polymer (MFR determined by method A of JIS - K-7210 GENERAL TEST METHOD BY FLOWING WATER, load 2160 g ), and ratios of MI's of each two of the polymers such that they will satisfy the following III - ① to III - ⑥.

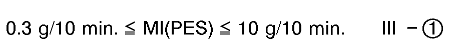

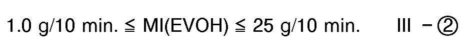

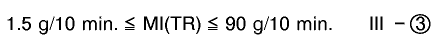

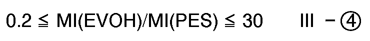

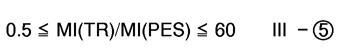

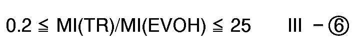

PES is the main resin constituting most of the tube. Therefore from a practical viewpoint it should not be selected only taking into consideration its compatibility with the EVOH or TR viscosity factors, or the temperature factor. Since tube and bottle moldability are of great importance for obtaining a good tube and a good bottle including quality items such as strength and transparency, the manufacturing conditions for PES tend to shift toward higher viscosities, higher melting points and lower modification degree, which are also influenced by productivity and production cost, thus making it technically difficult to have a proper formation temperature and a proper viscosity match those of EVOH and TR. Furthermore, because EVOH is a resin which is very sensitive to heat and tends to gel or deteriorates by thermal decomposition, it is necessary to lower the temperature of PES to the lowest at which the molding is still possible. Generally it is preferred to carry out extrusion molding while decreasing the temperature to approximate that of MP-(PES).
The PES used preferably in this invention satisfies the condition III - ①. The preferred range is 0.7 g/10 min ≦ MI(PES) ≦ 10 g/10 min. [η] of PES is 0.7 to 1.4, preferably 0.8 to 1.3. If the MI(PES) (at MP + 5 C) exceeds 10 g/10 min, that is, when the melt viscosity is too low, the tubular molten polymers prepared by coextrusion molding with EVOH and having a multilayered construction, will deform when extruded from the die during the passage from the exit of the die to a cooling fixing zone, and show a serious deformation or a thickness bias causing a difficulty in obtaining a uniform multilayered tube. On the other hand, if the MI(PES) is lower than 0.3 g/10 min., though the above-described deformation in the passage from the extrusion to the cooling fixing zone will hardly occur, flowability will be poor so that high speed molding will be difficult. Moreover the production of such a high-viscosity polyester requires special melt polymerization conditions or long - time solid phase polymerization and is difficult to manufacture at a low cost on an industrial scale.
The viscosity of EVOH is also very important. For the purpose of preparing a clean layer having a minimum thickness bias and no minute thickness nonuniformities which will cause streaks in the bottle, the proper range of viscosity coefficient is specified to be: MI(EVOH) ≦ 25 g/10 min, more preferably MI(EVOH) < 20 g/10 min. If the MI is higher than 25 g/10 min although the coefficient of melt viscosity of PES is in the above - described proper range, the EVOH layer constituting an intermediate layer of the tube obtained by coextrusion molding of the two resins forms a number of streaky nonuniformities in thickness, so that a container prepared from the tube will have a very poor appearance and in some cases its properties such as the gas barrier property and resistance to shock will be unsatisfactory.

On the other hand a high polymerization degree EVOH having a MI(EVOH) lower than 1.0 g/10 min has the following drawbacks:
it is difficult to extrude on account of its poor melt - extrusion property,
its moldability is poor because of its high tendency to gel and decompose when subjected to a high temperature,
it is difficult to coextrude with PES, and
it requires special polymerization conditions for the production of the high polymerization degree EVOH. Where there are limitations in equipment and production efficiency, it cannot therefore be obtained at low costs on an industrial scale.

Therefore the MI(EVOH) preferably is 1.0 to 25 g/10 min, more preferably 2 to 20 g/10 min.

The TR layer interposed between the PES layer and the EVOH layer has the function of bonding the EVOH layer to the PES layer and allowing PES/EVOH to be blow drawn simultaneously. The layer is preferably thinner, and the viscosity coefficient can be selected from a wide range. Thus good molding is achieved when the MI(TR) is 1.5 to 90 g/10 min at the MP(PES) + 5°C. However if the MI(TR) exceeds 90, the viscosity becomes very low and thus it is difficult for the polymer flow to form as a uniform thin layer inside the die; moreover if the difference in the viscosity of the PES layer and the EVOH layer is great, this will lead to an unbalance in the multilayer laminar flow, to pulsations or nonuniformities in flow and also to local minute surface irregularities and biased thickness. On the other hand although the moldability of the resin itself becomes better if the MI(TR) is less than 1.5 and consequently no problems will arise unless the viscosity of EVOH is very low, the TR polymer having invaded the flow pass of the EVOH layer, which happens for instance at the time the molding is started, will not easily be substituted with EVOH and tends to remain there causing a disordered flow of the EVOH layer. Therefore, the MI(TR) is preferably 1.5 to 90 g/10 min, more preferably 2 to 75 g/10 min. While viscosity is important for a good multilayer flow of polymers, the most important requirements for the TR resin are adhesiveness to PES and EVOH, the co- drawability in blowing, as well as physico - chemical properties including heat resistance, water resistance, appearance (transparency, etc.), and so on. Therefore, a preferably applicable resin can hardly be found among conventional resins.

III - @ to III - @ specify the applicable ranges of the viscosity coefficient of each resin. As regards the ratio of the viscosity coefficients of EVOH/PES, the ratio MI(EVOH)/MI(PES), might be thought to have no relationship with moldability because the two resins do not touch directly. In practice, however, this is not the case. Since the TR layer is a very thin layer, and the flow of PES greatly influences the EVOH layer, the ratio MI(EVOH)/MI(PES) is important particularly when the ratio is high. In this case an irregularity in the polymer flow of the high-viscosity side (PES) strongly affects the flow of the low - viscosity side (EVOH), upsets the balance of the laminar flow, and produces disorders such as irregularities of thickness or thickness bias caused by pulsation at the interfaces of the laminate. Thus it is not possible to obtain a multilayered tube having no thickness bias and minute nonuniformities in thickness. The tendency to deformation is more pronounced as the thickness increases. Thus a rather thick PES layer allows the selection of a higher viscosity while with a thinner TR layer a somewhat lower viscosity can be chosen. For the above reasons, it is preferred that conditions III - ④ to III - ⑥ be satisfied, and more preferably:

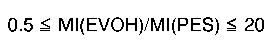

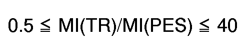

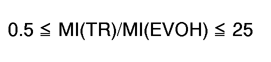

The melt index (MI) used in this invention means the melt viscosity index of PES, EVOH or TR in a tube, and is defined as follows according to JIS - K - 7210. 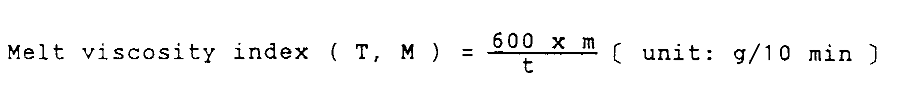 wherein:
T is the temperature measured (MP(PES) + 5 ° C)
M is the load (2160 g, constant)
m is the weight of the polymer extruded (g)
t is the period of polymer extrusion (sec)

For measuring the melt viscosity index it is necessary to reduce the moisture content of specimens to 20 ppm or below for PES, 50 ppm or below for TR and 500 ppm or below for EVOH respectively by drying them in vacuum or with hot air prior to the measurement.

The PES used in this invention is a polyethylene terephthalate - based polyester. A suitable polyester, is a polyester resin being principally composed of a glycol component and an acid component, containing terephthalic acid in an amount not less than 80 mol%, preferably not less than 90 mol%, of total acid component, and ethylene glycol in an amount not less than 70 mol%, preferably not less than 90 mol% of total glycol component. Examples of other acid components include isophthalic acid, phthalic acid, naphthalene - 1,4 - or 2,6 - dicarboxylic acid, diphenylether - 4,4' - dicarboxylic acid, aromatic dicarboxylic acids such as diphenyldicarboxylic acid and diphenoxyethanedicarboxylic acid, aliphatic dicarboxylic acids such as adipic acid, sebacic acid,azelaic acid and decan - 1,10 - dicarboxylic acid, alicyclic dicarboxylic acids such as cyclohexanedicarboxylic acid, etc. These are used alone or in mixtures of two or more, being mixed with terephthalic acid in an amount not exceeding 20 mol% of the total acid component. Examples of other glycol components are aliphatic glycols such as propylene glycol, trimethylene glycol, tetramethylene glycol, diethylene glycol, polyethylene glycol, polypropylene glycol, polytetramethylene glycol, hexamethylene glycol, dodecamethylene glycol and neopentyl glycol, alicyclic glycols such as cyclohexyl glycol and aromatic glycols such as 2,2-bis(4-_{;}8-hydroxyethoxypheny!)propane. These glycols may be contained in an amount not exceeding 20 mol% of the total glycol component. The composition of the inner PES layer and that of the outer PES layer may be the same or different.

If the ethylene content of EVOH as the intermediate layer exceeds 55 mol%, the gas barrier property which is a marked characteristic of the resin, becomes poor, while with a content of less than 20 mol% molding processability will be so poor as to be unsuitable for the purposes of the invention. Therefore, the ethylene content of EVOH is preferably 20 to 55 mol%, more preferably 25 to 50 mol%. The saponification degree of the vinyl acetate component is preferably 96 mol% or higher. Where it is less than 96 mol% the gas barrier property decreases and is not suitable in practical use. In the preparation of EVOH, a monomer other than but copolymerizable with ethylene and vinyl acetate may be used for copolymerization followed by saponification, within a range not impairing the purposes of the present invention.

Examples of compounds preferably used as the TR layer which is interposed between the inner and outer PES layers and the intermediate EVOH layer according to this invention, include ethylene-vinyl acetate copolymers grafted with an unsaturated carboxylic acid or anhydride thereof, polyolefins grafted with an unsaturated carboxylic acid or anhydride thereof, ethylene - acrylic acid esters (e.g. ethyl acrylate ) grafted with an unsaturated carboxylic acid or anhydride thereof and polyesters having bonded wherewith aluminum atom and a monocarboxylic acid described in USP 4496714 (JPA 115327/84).

The inner and outer layers of the multilayered tube according to this invention may, where necessary, be provided with another resin layer; but from the viewpoint of mechanical strength and appearance it is preferred that the PES layers be the outer layers. Furthermore each layer of the multilayered tube may incorporate pigments, dyestuffs, antioxidants, ultraviolet stabilizers and fillers.

Above, important manufacturing conditions for one of the multilayered tubes according to the present invention have been explained. Hereinbelow, important conditions of other manufacturing factors will be explained with reference to a representative example.

The present inventors have found, as a result of a number of molding tests of multilayered tubes, that the important points in the manufacturing technique are
(i) the selection of a resin
(ii) the extrusion conditions of the resin
(iii) the structure of die and operating conditions
(iv) the starting conditions in molding

The selection of the resins is very important as regards molding technique of a multilayered tube. In particular, the viscosities of the resins used and their compatibility with each other (ratio of coefficient of viscosity) are important as described heretofore. However, apart from the requirements of product qualities and the viscosity and the compatibility thereof, the conditions in the manufacturing technique are very important for obtaining a good tube. The conditions will be elucidated hereinbelow based on the studies made by the present inventors.

First of all, an important point is the selection of the resins; below are the points to be observed in selecting each resin.

### (Selection of the TR resin)

As already explained the main property the TR resin has to possess is adhesiveness in a multilayered tube and bottle, compatibility with the viscosity of the other resins at the time of coextrusion molding, and drawability in blow molding. When selecting the TR, only adhesiveness has so far been taken into account. However for obtaining a good bottle having no streaks, TR must, while being incorporated between the PES layer and EVOH layer, harmonize with the moldabilities of both PES and EVOH which are largely different from each other. Consequently, this is one of the points to be considered in the selection of TR.

While being incorporated between the PES layer and EVOH layer in the passage inside the die, TR must meet the following requirements: it must be
(1) capable of suppressing heat transfer from high-temperature PES to EVOH and thereby suppress over-heating of the EVOH, and
(2) capable of preventing delamination of the PES and EVOH in the cutting process of tubes and during preforming, by suppressing residual internal stress resulting from a difference in the heat shrinkage in the sizing and cooling process and by relaxing the residual internal stress.

More concretely, important factors are the melting point, crystallinity, proper temperature for molding and elastic modulus of the TR. The points to be observed are summarized as follows:
(1) The melting point of TR should be much lower than the molding temperature of PES, and be as close to the melting point of EVOH as possible. The preferred range is expressed as follows: 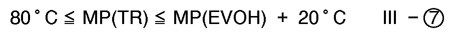 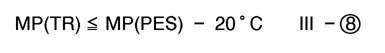 wherein the melting point (MP) means the crystalline melting temperature which is determined using a differential scanning calorimeter (DSC) at a temperature raising rate of 20 ° C/min.
(2) When exposed to a high temperature (molten PES), the resin should not deteriorate or show unusual behavior, such as foaming, gelation and coloring, and should be suitable in a wide molding temperature range.
(3) The melting point of TR should be higher than the glass transition temperatures of PES and EVOH, and at the same time higher than the blow temperature of the bottle, that is, it should be 80 ° C ≦ MP - (TR), more preferably 90 ° C ≦ MP(TR).
(4) The resin should have a lower elasticity than PES and EVOH. While the elastic moduli of PES and EVOH are generally 12000 to 32000 kg/cm², that of TR should be 6000 kg/cm² or less preferably: 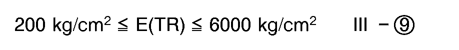 more preferably 300 kg/cm² < E(TR) ≦ 5000 kg/cm² wherein E(TR) means the elastic modulus at room temperature ( 0 to 45 ° C ).

The resin should have a low crystallinity at the molding temperature range ( particularly at 75 to 130°C which is a range for parison molding and blow molding) to exclude whitening due to crystallization.

### (Selection of the EVOH resin)

EVOH is a resin which tends to deteriorate greatly by heat, and thus already presents technical difficulties in molding for this reason. In connection with the formation of the multilayered tube of this invention where the coextrusion with a high-temperature PES is necessary, it involves still more difficulties so that the selection of the resin is very important. While it has already been explained that the relationships of polymer viscosity during molding with PES and TR are most important, considerations listed below are also important in selecting EVOH because of the special characteristics of EVOH.
(1) EVOH is a resin of very poor extrusion moldability, and has the annoying characteristic of readily deteriorating and undergoing gelation when subjected to high temperature extrusion at high shear so as to melt completely, since the extruded polymer readily incorporates unmolten matters. Therefore the resin should have a uniform composition containing no abnormally polymerized compounds and no unevenness in crystallinity.
(2) EVOH is a resin having a particular tendency to deteriorate by heat. Therefore a high precision filter which will cause minute stagnation of the polymer should not be used. Only little, if any, contamination of foreign matters or gels may be allowed therein.
(3) Although PES and other resins are used after drying to a low moisture content of about 50 ppm or below, such a high degree of drying will in the case of EVOH cause problems such as deterioration or degradation. Therefore, the moisture content of EVOH should be kept high, within a range not causing deterioration by hydrolysis but improving extrusion moldability. The moisture content should be 500 to 2000 ppm, preferably 800 to 1800 ppm.

### (Selection of the PES resin)

(1) In the selection of PES, the most important factors are fundamentally, as already explained, the tube molding characteristics represented by the polymerization degree and viscosity.
(2) Pure PET is most preferable from the viewpoint of costs and bottle properties. However, considering such factors as the molding viscosities of EVOH and whitening due to crystallization of a tube having a thicker wall, it is also possible to use a polyester in an amount of about 2 to about 15 mol% which due to modification with e.g. cyclohexanedimethanol shows a lower temperature moldability and a lower crystallinity. Generally, for a thin wall tube having a wall thickness of 3 to 4 mm or below, pure PET or a PES close thereto, slightly modified in an amount of 2 to 3 mol% is preferred; while for a thicker tube having a wall thickness of not less than 3.5 to 4 mm, a PES modified in an amount higher than 2 to 3 mol% is used.

The points to be observed in respect of the extrusion conditions for these resins will be explained hereinafter.

### ( Extrusion conditions for PES )

PES ( particularly pure PET ) with a high polymerization degree for tube molding tends to decrease in tube moldability if extrusion - kneading is insufficient. Therefore extrusion - kneading is promoted by raising the extrusion temperature and increasing the screw rotation. Due to self heating, the temperature raises considerably and, if the high temperature PES extruded in a large amount is introduced into the die as it is, the whole die will be heated to a high temperature, causing problems for the PES itself such as viscosity decrease and formation of decomposed matters, and for TR and EVOH which deteriorate inside the die.

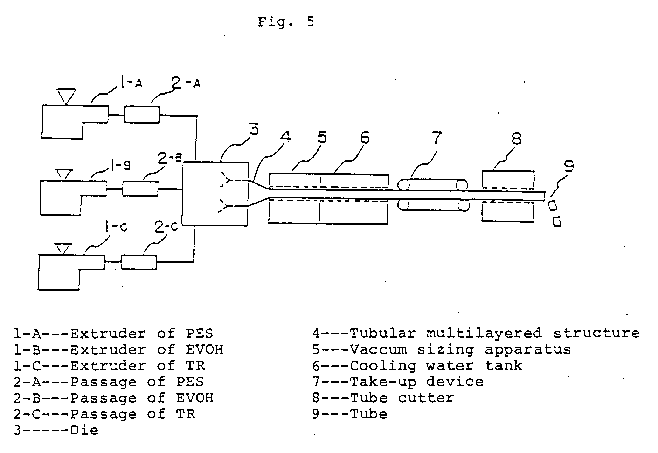

To avoid this, it is preferred to apply cooling to a proper temperature by a method comprising using an extruder of high kneading and low heat generation type as shown in Figure 5, which is provided with a feed zone, a compression zone and a metering zone, and cooling at the exit side of the metering zone or cooling with a thermogenizer ( static mixer for cooling ) mounted on the polymer pass 2-A, and so on. Too rapid cooling will however cause a local supercooling promoting the local crystallization of PES, which would produce whitenings. Furthermore when at 1 -A of the extruder for PES variations in amounts extruded in the temperature and in pressure occur, this will lead not only to a variation in the tube weight or in multilaminar polymer flow inside the die, but also to a great variation of the sizing state which has been minutely adjusted. The great problem resulting therefrom would be a deteriorated tube surface and nonuniformities in the tube thickness. To stabilize the sizing, it is preferred that the variation of the amount extruded be ± 2.5 % or below, preferably ± 1 % or below, the variation of the polymer temperature be ± 5 ° C or below, preferably ± 3 ° C or below, and the pressure variation be ± 4 % or below, preferably ± 2 % or below.

### ( Extrusion conditions for EVOH )

EVOH readily deteriorates by heat. At places of stagnation or of slow flow in the polymer pass, it will therefore show abnormal formations such as gels, foaming or coloring by degradation, which will mix into the EVOH polymer, leading to streaks or "grains" ( granular matters having mixed thereinto abnormal substances such as gels ). In particular, degraded matters deposited at the pass confluence inside the die are the principal cause of streak formation. To prevent the heat deterioration of EVOH, it is necessary in the first place to decrease the temperature of the polymer extruded. However, since EVOH having a high viscosity or high barrier property ( having a low ethylene content) is used for multilayered tubes, a decrease in the extrusion temperature will decrease meltability in the extruder and lead to the formation of local nonmolten matters due to insufficient kneading. The unmolten polymer will then mix into the polymer flow, producing granular defects, or remain at deflected parts or at parts of low flow rate in the passage and form gel - like grains which again mix into the polymer, producing granular defects. Sometimes they lie attached to the wall of the pass in the die and thus roughen its surface causing the formation of streaks. Consequently good results cannot be obtained by simply lowering the extrusion temperature.

The results of various studies performed by the present inventors to obtain a good EVOH layer, are explained hereinbelow with reference to an example of effective and important extrusion conditions.
① The screw of the extruder 1 - B shown in Figure 5 is required to be of high kneading capacity, allow no stagnation and generate only little heat. The preferred screw is a single axis full flight screw having a large L/D ( not less than 22, preferably not less than 26 ).
② The rate of shear of EVOH at the metering zone of the extruder 1 - B ( consisting of a feed zone, compression zone and a metering zone ) is adjusted to: = 20 sec⁻¹ or higher, preferably = 30 sec⁻¹ or higher.
③ The entire passage from the extruder 1 - B to the die 3 shall be constructed in such a way as to have no stagnation region and it is preferred that the inner wall surface be smooth, preferably finished by hard chromium plating so that deposits can hardly form.
④ The average flow rate of the polymer in the die 3 is preferably 0.2 cm/sec or higher, and the rate of shear therein is preferably 4 sec⁻¹.
⑤ It is another effective method to provide the polymer passage 2 - B with a static mixer having no stagnation region such as the thermogenizer for cooling, with which the cooling of the polymer will be controlled.

### ( Extrusion conditions for TR )

As regards the extrusion of TR, it is important that the polymer extrusion be performed without forming irregular matters as in the case of PES and EVOH which requires the selection of appropriate extrusion conditions for the TR to be used. Of particular importance are the setting of the extrusion temperature and the balance between the extrusion temperature and the die temperature. If the TR temperature is too low as compared to that of the die temperature or the temperature of PES, the TR flow will show a temperature variation especially at the spiral mandrel, resulting in nonuniform thickness and streaks. On the other hand, if the TR temperature is too high relative to the extrusion temperature of EVOH, the EVOH temperature will raise as well, whereby the effect of preventing EVOH from a high temperature PES is cancelled resulting in superheating of EVOH, which accelerates the deterioration of the EVOH and increases the causes of streaks and nonuniform wall thickness. Therefore while allowing to some extent a deviation from the most appropriate molding temperature for TR itself, the extrusion temperature of TR shall be selected, taking into consideration temperature balances with EVOH and PES. For example when PES has a melting point of 230 to 255 ° C, the standard temperature conditions are 255 to 285 ° C for PES at the die entrance ( 265 to 300 ° C at the highest temperature region of the extruder ), 220 to 260 ° C for EVOH at the die entrance, and 230 to 260 ° C as the set temperature for the die mold. Therefore, when the melting point of TR is 115°C, though the appropriate temperature range for molding TR is about 140 to about 180°C, the temperature of the die entrance is preferably set at 190 to 250 ° C for obtaining a good tube.

The manufacturing process of the multilayered tube of this invention will now be illustrated with reference to a simple flow sheet. Figure 5 is an example of a representative flow sheet of a molding process for preparing a 5 - layered tube of the 3 resins PES/TR/EVOH and the manufacturing apparatus. 1 A, 1 - B and 1 - C are extruders each of which is provided with a feed zone, compression zone and a metering zone, for PES, EVOH and TR respectively. 2 - A, 2 - B and 2 - C are passages of the three polymers, each of which is where necessary provided with a filter, a gear pump, a thermogenizer ( static mixer ), a purging valve, a temperature measuring device, an instrument for measuring the extrusion pressure, a heating and heat - insulation system, a cooling device, and so on. The die indicated by 3 is selected from many types, some of which are known from JPA 5750/1981 and JPA 147306/1985. The die conditions suitable for the present invention will be elucidated later. 4 designates a tubular multilayered structure in the process of having the die 3 and entering the sizing apparatus 5. 5 designates a vacuum sizing apparatus of the external cooling type, and 6 a tank for cooling water under atmospheric pressure. 7 is a take - up device of a representative top - and - bottom belts type for taking up the cooled and solidified tube and supplying it to a tube cutter 8. 8 designates a tube cutter which is a continuous tube cutter for cutting the running tube into short segments each corresponding to a bottle or into somewhat longer segments corresponding to a plurality of bottles.

The dies for molding a multilayered tube ( hereinafter referred to simply as "die") which is the most important device in the preparation of a multilayered tube, and its operating conditions will be explained hereinbelow. Known dies are as disclosed in JPA's 5750/1981 and 147306/1985. Similar dies are also known from JPA's 45369/1979, 102052/1976, 45163/1974, 127310/1986 and 212919/1983 and Japanese Patent Publication No. 29215/1983.

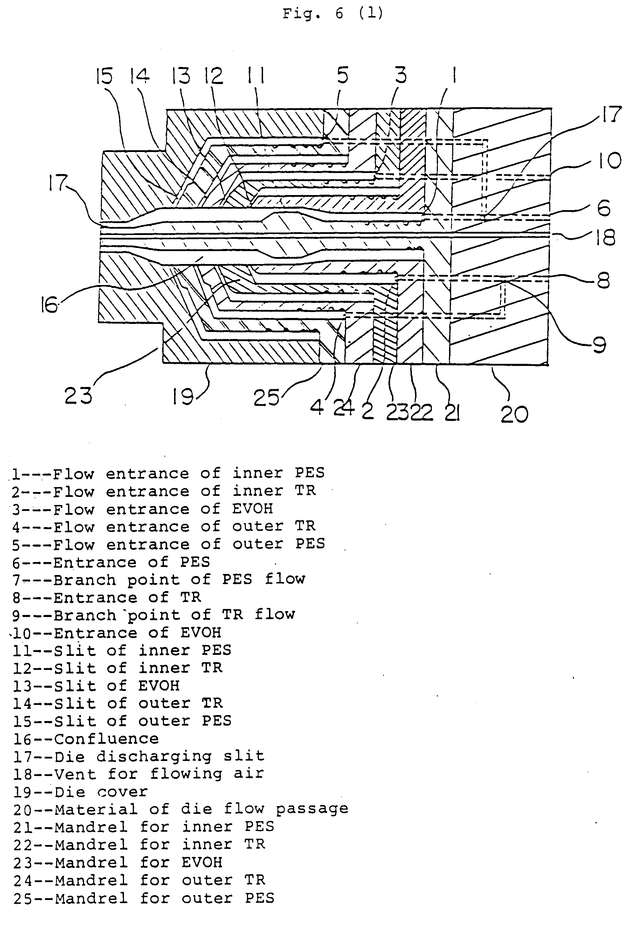

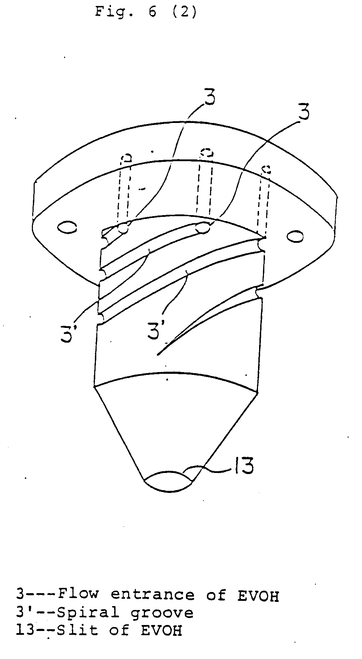

Figure 6 shows an example of a die flow passage structure. Figure 6 - (1 ) is a cross sectional view in the axial direction of the die. Figure 6 - (2) shows the entering mandrel 23 constituting the die. 1 designates the flow entrance of the inner PES layer, 2 that of the inner TR layer, 3 that of EVOH, 4 that of the outer TR and 5 that of the outer PES. 6 is the entrance of PES, 7 the branch point of PES flow, 8 the entrance of TR, 9 the branch point of TR and 10 the entrance of EVOH. PES supplied to the entrances of the inner and outer PES layers 1 and 5 passes through the spiral passages of mandrels 21 and 25 for the inner and the outer PES layers respectively, while being circumferentially uniformly distributed, and passes to discharge slits 11 and 15 and finally to the confluence 16. Similarly, TR supplied to the TR entrances 2 and 4 passes through spiral passages of mandrels 22 and 24 for TR, while being circumferentially uniformly distributed, and then passes to discharge slits 12 and 14 and finally to the confluence 16. EVOH is fed in a similar manner starting at the entrance 3. At the confluence 16 the tubular polymer flow comprising 5 layers of 3 different resins is formed, which then proceeds to the die discharging slit 17, and is extruded from the die to the sizing apparatus. 18 is a vent for supplying air to control the pressure inside the tube. 19 is a die cover, and 20 the material of the die flow passage.

Figure 6(2) shows the entering mandrel for EVOH. The EVOH polymer supplied to the entrance of the EVOH layer is circumpherentially uniformly distributed by flow levelling along a spiral groove 3', and introduced into the EVOH discharge slit 13. The entrance passage 3 consists of a plurality of gates distributed evenly on a circumference so that the uniform flow levelling will be attained. The number of the gates depends on the diameter of the mandrel.

To prepare a good tube using the above-described mandrel having a spiral passage, it is important for the polymer flows to show almost no stagnation at the passages of each mandrel ( particularly in the spiral passages ) and distribute circumpherentially uniformly. In particular the EVOH passage, should be free from stagnation regions and of regions of slow flow. The average flow rate of EVOH is preferably 0.2 cm/sec or higher. The smoothness of the passages is also important. The EVOH passage is preferably plated with hard chromium, which is a metal having little tendency to deteriorate and to allow resin deposit to form when contacted closely with EVOH, having specular gloss with a surface roughness of 0.5 S or below, more preferably 0.1 S or below.

The most important parts of the total system for achieving good moldings without streaks are the discharge slits 11, 12, 13, 14 and 15 of each polymer leading to the confluence 16. Preferred discharge slits must be smooth and flawless and have a slit gauge as narrow as possible to prevent the deposition of deteriorated matters which will cause streaks, must discharge uniformly and increase the rate of shear at the discharge. However, too narrow a slit will increase the extrusion pressure and also increase any variation in the slit gauge which would result in great thickness bias variations. The slit gauge is also restricted from the viewpoint of machining precision and assembling precision. The slit gauges are preferably 0.5 to 5 mm for PES, 0.2 to 1.2 mm for EVOH and 0.2 to 1.2 mm for TR, more preferably 0.8 to 3.0 mm for PES, 0.3 to 1.0 mm for EVOH and 0.3 to 1.0 mm for TR.

The adjustment of the slit gauge of the die is also very important. The slit gauge is so adjusted that its variation is less than about ± 3 %. In the case of the EVOH slit, the difference between maximum and minimum is less than about ± 20 /1.m, more preferably ± 10 µm or below. It is preferred to have a die structure capable of performing minute adjustments of the gauge of the discharge slit also in the course of operation, since delicate thickness nonuniformities will form depending on the conditions of mandrel passage or of sizing. Such minute adjustments are effectively carried out by an adjusting bolt making use of the bending property of the mandrel while watching thickness variations. The gauge of a discharge slit shall be designed to take the shear rate of the polymer as an important index, which is particularly important for the EVOH slit since the precipitation of deteriorated matters at the slit will greatly influence the formation of streaks.A particularly preferred shear rate is = 30 sec-¹ or higher.

As explained above, the die is a very important device which introduces each molten polymer into each extruder, distributes the polymer into a tubular polymer flow and then unites the flows to form a tubular multilayered polymer flow.

The present inventors have prepared, and made a series of tests with dies of various forms and structures. As the result, it has been found that a die having a spiral mandrel structure,an example of which is shown in Figure 6 - (2), is most appropriate, and that it is very important, particularly in the case of EVOH, to provide the mandrel structure with a smooth passage to prevent stagnation and achieve a flow as smoothly as possible. It is also important to have an average flow rate at each part on the mandrel of 0.2 cm/sec or higher, preferably 0.3 cm/sec or higher so as to suppress formation of streaks over a long period of time. The rate of shear at the exit of the discharge slit where the EVOH layer meets the TR layer and the PES layer is more than 30 sec1, preferably more than 50 sec1. This is necessary because of the following fact: even in a smooth passage where no stagnation occurs, the viscosity of EVOH will increase when the rate of shear is low, at a region of slow flow on account of the thermal degradation of the EVOH. The flow rate will become slower, thus gelation will be promoted resulting in the deposition of degraded matters around the discharge slit. The deposit will grow gradually whereby the passage surface is deformed and minute nonuniformities of thickness are produced by the nonuniformity of the polymer flow, causing the formation of streaks. Therefore, the shear rate of the EVOH passage surface must be high to prevent streak formation. Furthermore when a deformation or roughness caused by gelation appears once in the extrusion molding of EVOH, it is almost impossible to restore the original good condition by employing a purging agent or by adjusting the operation conditions. Rather it is necessary to complete disassemble and clean all passages from the extruder to the die, and to start then again.

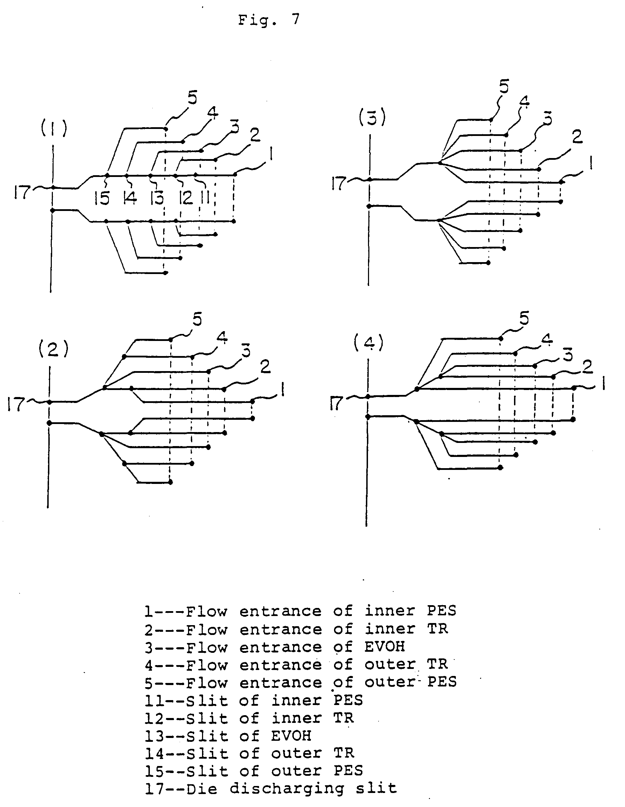

There are not many known dies having a spiral mandrel structure as described above which can be used for coextrusion molding five layers of three different resins. But dies which will join each layer one by one to form a multi - layered structure, are disclosed in JPA's 5750/1981 and 147306/1985. The present inventors have made intensive studies on dies having a spiral mandrel structure and prepared 4 kinds of dies having confluence structures shown diagrammatically in Figure 7 to study moldability. Numbers 1 to 5 are alloted corresponding to Figure 6. Figure 7(1) is a flow diagram showing a flow and confluence system of a die disclosed in JPA 147306/1985 and having a one - by - one joining system as shown in Figure 6. Figure 7(2) is a die where TR and PES of the outer layers and inner layers meet first and are laminated with each other, and finally the laminate meets the EVOH. Figure 7(3) is a die with a simultaneous confluence system in which the 5 layers meet at the same time. Figure 7(4) is a die in which EVOH and TR meet first and then PES joins from both sides. From the standpoint of confluence system die structures are basically divided into the above four systems. A suitable die for the purposes of the present invention is any confluence system as it can perform streakless moldings if the structure of the passages (particularly of discharge slits and of confluence regions) is appropriate and the conditions for the polymers and the operation conditions (particularly, of starting up) are also appropriate. When the total difference in viscosity and temperature is great or under such difficult conditions as high speed molding with high output, dies having the confluence structures of (3) and (4) can perform molding operation more stably than those having structures (1) and (2).

In the following it will be explained how extrusion molding of the tube is to be started which is one of the very important techniques for preparing a good bottle having no streaks. The properties and conditions of polymers and the die structure will be considered in the explanation.

As a result of a study on the manufacturing technique of the tube according to this invention, it has been found that the starting of the extrusion molding has a great influence on the streak formation. This will be explained hereinbelow with reference to typical examples. In general it can be said that, in the case of molding a conventional multilayered sheet or tube, extrusions for each polymer are started voluntarily, and each polymer is introduced at will into the die followed by purging for a relatively long time at an increased discharging rate until molding becomes stable. When in the coextrusion molding of the multilayered tube utilizing high temperature PES and EVOH according to this invention, the EVOH invades another passage or when PES of high temperature and high viscosity mixes in the EVOH passage, the viscosity will increase and the stagnated EVOH will deteriorate because of the heat. The EVOH will thus remain and deposit in the passage,resulting in the formation of streaks or gel - like grains. An improvement is not expected by discharging and replacing the deteriorated matters by a conventional method of increasing the extrusion rate or by purging over a prolonged period. That is, in the case where due to an improper starting of the extrusion molding, a roughness of the flow passage surface (minute deflection caused by deposit of degraded matters) is formed in the initial EVOH passage, this passage surface cannot be restored to its original state and it is very difficult to remove streaks from the EVOH layer, even when one tries to improve the flow or clean the passage surface by changing extrusion conditions of the polymer or by using a purging and substituting resin.

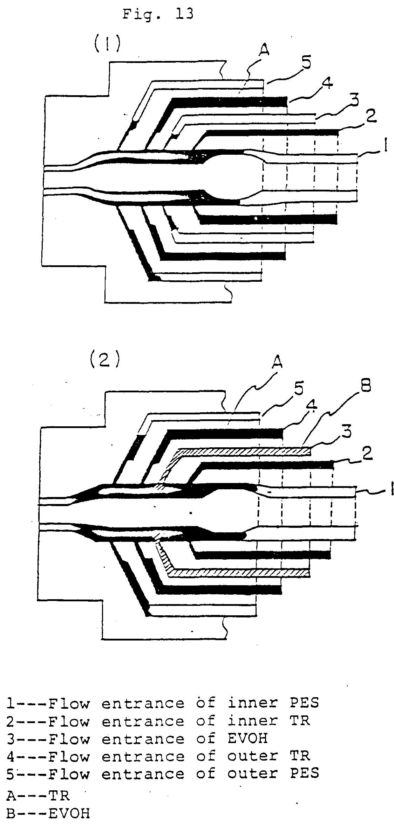

Therefore, for solving streak problems, the starting method for the extrusion molding operation, i.e. the state of the polymers which are introduced into the inside of the die is very important, and in particular the behavior of EVOH inside the die is most important. As a result of a variety of studies made by the present inventors on manufacturing techniques for getting a tube having no streaks, there have been found effective methods for starting a good coextrusion operation, as described below. First an example of the starting operation will be explained in which the order and timing of introducing the polymers into the die is precisely controlled. As regards the order of introducing the polymers, the TR is first discharged into the confluence region to wet the PES slit, at the confluence region, then the EVOH is introduced and discharged from the slit, followed by extruding PES. Figure 13 is a diagram showing the flows and timing of the discharge of the polymers at the die for molding the tube of the present invention. The flow passages are those of the die shown in Figure 6 - (1). In Figure 13(1), TR is first supplied from the entrances 2 and 4 and discharged to the confluence region to wet each passage surface, and on this timing EVOH is introduced from the entrance 3. The black area of A designates TR. In Figure 13(2) where EVOH has already been introduced, the flow passage surface is covered with TR to prevent an instantaneous sticking of EVOH. The hatched area of B shows EVOH. That is, PES is introduced to form Figure 13(2). This starting method can prevent EVOH from sticking or invading other passages, and high-temperature PES from invading the EVOH passage, thus making good moldings possible. If the above method is not adopted and EVOH is introduced first, the EVOH invades other passages and adheres thereto. As a result, it stagnates and forms gels on the passage surface, which are difficult to substitute. Since the viscosity of TR is not high and the shear stress of TR at a low flow rate is small, particularly EVOH which has invaded the TR passage will stick to the TR passage and remain there, as it is neither extruded nor replaced to deteriorate and gel further, forming deposits on the passage surface which cause streaks and grains. If PES is started first, the PES invades the EVOH passage. PES having adhered to the EVOH passage cannot, due to its high viscosity, be smoothly extruded and substituted with the EVOH discharged next. It stagnates and promotes thermal degradation of EVOH upon contacting it because of its high temperature. Needless to say that for the starting operation it is necessary that the passage surfaces have been fully cleaned beforehand and that the polymers (particularly EVOH) to be introduced be clean ones and should not contain any foreign or unmolten matters.

Another starting method will be explained next. This is a starting method performed with polymers of low viscosities, which are then substituted. This method comprises starting the molding by first extruding polymers having low viscosities and thereafter substituting them with normal polymers for molding. The method employed here is performed with the same polymers as those used for the molding, which have low viscosities; but a method using other polymers such as polyethylene (PE) and polypropyrene (PP) is also effective.

In the method of substituting the same or other polymers having low viscosities, the timing of changing over need not be strictly controlled and there rarely occurs a failure, provided that the discharging order meets the characteristics of the polymers used and the conditions are selected properly. Examples of a practical order of extrusion and substitution are as follows, wherein (L) designates a low viscosity polymer and (N) designates a normal polymer.
(i) (L) ( 2nd and 4th layers ) TR - (L) ( 3rd layer ) EVOH - (L) ( 1 st and 5th layers ) PES - (N) ( 2nd and 4th layer ) TR - (N) ( 1 st and 5th layers ) PES - (N) ( 3rd layer ) EVOH
(ii) (L) ( 2nd and 4th layers ) PE - (L) ( 1 st and 5th layers ) PE - (N) ( 3rd layer ) EVOH - (N) ( 2nd and 4th layer ) TR - (N) ( 1 st and 5th layers ) PES
(iii) (L) ( 2nd and 4th layers ) TR - (L) ( 3rd layer ) EVOH - (N) ( 1 st and 5th layers ) PES - (N) ( 2nd and 4th layer ) TR - (N) ( 3rd layer ) EVOH

Depending on the types of substituted resins, it will also be effective to start with polymers of a relatively low temperature and then to change over to normal molding conditions.

Polystyrene, nylon, high - modified PES, and the like are also useful as polymers to be substituted. The low viscosity EVOH used in this method is selected from grades having a good thermal stability.

Further starting methods are methods including a method which comprises adjusting the extrusion rates of PES, EVOH and TR to obtain good flows, a method which comprises cooling and substituting the inside of the die and the polymer passages ( particularly EVOH passage ) with an inert gas, and a method which comprises starting with polymers including PES, which can be extruded at a low temperature of 200 to 250 ° C.

In the following the preparation of multilayered containers obtained from the multilayered tubes of this invention is explained. A bottle having good appearance, substantially no streaks and excellent gas barrier properties, pressure tightness, shock resistance and transparency can be obtained by making a preform from the multilayered tube having the above structure and subjecting it to biaxial blow molding. Defects in appearance ( streaks ) which appear as continuous lines in the longitudinal direction on the bottle body, are longitudinal streaky irregularities. Each of these defects is caused by a nonuniform refraction of light through a resin lens formed by the irregularity in the thickness extending linearly in the longitudinal direction of the bottle body. This defect becomes a more distinct streak as it grows bigger and exceeds a certain size, and will show up on the bottle. The bottle loses its commercial value. The streaks of the bottle will further be elucidated below.

The bottle having substantially no streaks as described herein, except for streaks originating from a shift of the matching planes of the mold or for streaks added for decoration purpose, is a bottle which has absolutely no longitudinally continuous region of optical nonuniformity caused by slight nonuniformities in the wall thickness or which has so invisible irregular streaks as not to detract from its appearance and not to make a person who uses it feel that the bottle is of inferior quality.

As the result of a study on streaks on the bottles obtained by making preforms from tubes and biaxially blow molding them, it has been found that, among streaky nonuniformities on the EVOH layer of the bottle body,such a nonuniformity is clearly recognized as a streak that has a ratio of the difference between the maximum thickness ( tmax ) and the minimum thickness ( tmin ) in a segment in the EVOH layer between two points 100 to 500 /1.m circumferentially apart from each other to the distance of the two points ( L ), that is, (tmax - tmin)/L, of 1/1000 or higher. When a streak of this size is present on the bottle, the bottle will look unappealing and its commercial value will decrease.

On the other hand a circumferential portion ( EVOH layer ) wherein the ratio of (tmax - tmin)/L is less than 1/1000 does not detract from the appearance of the bottle and does not decrease the commercial value of the bottle.

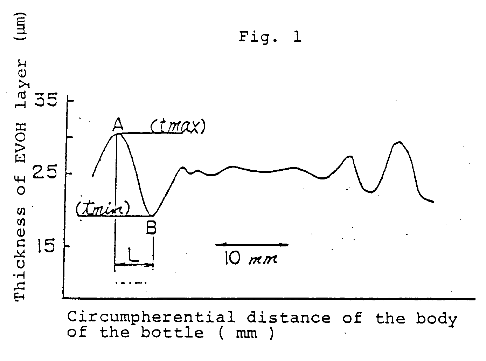

Figure 1 shows a graph of thickness distribution circumferentially continuously measured on a specimen having an average thickness of 25 µm of EVOH layer which specimen was taken from a circumpherence of the bottle body of a PES/EVOH multilayered bottle. Measurement of thickness was done on the specimen of EVOH layer being moved at a constant rate, by using a continuous thickness tester having a curved surface probe R₃. Any instrument, however, can be used if it can measure local thicknesses with the same precision. The ordinate represents the thickness of the EVOH layer in µm, and the abscissa represents the circumferential distance of the bottle body in mm.

Figure 1 shows that the thickness of the EVOH layer is not uniform.

Among the nonuniformities, different types are observed. One type shows such a difference in heights as a high mountain and a deep valley, another one shows only a minor difference, and still another one resembles the difference in height between a small mountain and a valley, etc. As shown in Figure 1, point A is marked on the peak of a mountain in the thickness distribution curve, while B is marked on any point not less than 0.1 mm apart from A. The difference in the thickness of the EVOH layer at points A and B (tmax - tmin) and the distance between A and B (L) are measured, followed by calculation of the ratio (tmax - tmin)/L. A bottle having streaks detracting from its appearance is found to have more than one parts in which the above ratio is 1/1000.

On the other hand a bottle having substantially no streaks that is, a bottle which does not have so distinct a streak as to detract from its appearance and to lower its commercial value, does not show a portion having the above ratio of not less than 1/1000.

In this way it is possible to distinguish a serious streaky nonuniformity from a harmless streaky nonuniformity by the results of measurement of the thickness distribution of the EVOH layer of the bottle.

A multilayered container is prepared from the multilayered tube of this invention as follows:

After cutting the multilayered tube into segments of a prescribed length, a neck part ( mouth and thread ) is prepared and simultaneously with or prior to or after that, the other end of the segment is sealed by heating and fusing to give a preform. The preform is mounted on a biaxial blow molding machine and is subjected to heat biaxial blow molding to give a multilayered container ( bottle ) having substantially no streaks and having a beautiful appearance.

As methods for biaxially blow molding the preform, any known method such as sequential blow molding or simultaneous blow molding can be employed. A suitable sequential blow molding method comprises drawing a parison, while inserting an extruding bar and blowing in a gas at a relatively low pressure, and then drawing it circumferentially while blowing in a gas at a relatively high pressure. A suitable simultaneous blow molding method comprises carrying out both circumferential and axial drawings simultaneously while blowing in a gas at a high pressure. Suitable gases blown in during blow molding are air, nitrogen heated air, steam and the like. The axial drawing is performed for example by applying a drawing bar to the inside of the bottom of the parison and extending the drawing bar, while grasping the mouth of a parison with the mold and the mandrel.

It is preferred that the drawing ratio in the axial direction be not less than 1.5 times the preform length and that in the circumferential ( radial ) direction be not less than 2.5 times the bottle diameter. Particularly, in the case where the radial drawing ratio is small, the drawing of the EVOH layer is insufficient and nonuniform drawing tend to occur, detracting from the bottle appearance and from the mechanical strength. Further if the radial drawing ratio is higher than 3, uniform drawing can be achieved if there are no local thickness of other irregularities. Uniform drawing whereby streak formation is minimized which detracts from the appearance and the commercial value is possible with this ratio since the drawability is increased because the EVOH layer is co-drawn with the PES layers. The preferred range for the radial drawing ratio is 2.5 to 5. The preferred range of the axial drawing ratio is 1.5 to 5, and that of the total drawing ratio ( radial drawing ratio x axial drawing ratio ) is 5 to 20, more preferably 5 to 15.

In biaxial blow molding the preforms are heated at a temperature of 75 to 130°C. For obtaining a bottle of better appearance, heating at 80 to 125 ° C is preferred.

As described before, the bottle thus obtained is substantially free from streaks and has not only a beautiful appearance but also excellent gas barrier properties. It is preferably used for foods, beverages, alcohols, particularly carbonated drinks and beers, as well as medicines and cosmetics.

While biaxial blow molding is mentioned as a representative example of molding of a multilayered tube, it is also possible to use a method which comprises drawing the obtained tube radially or both radially and axially to enlarge the tube diameter, cutting the enlarged tube to suitable lengths, and providing a stopper at both ends thereof to give a can - shaped container.

The invention is illustrated hereinbelow with reference to Examples, but the invention is by no means limited by the Examples.

### Example 1

A polyethylene terephthalate resin having a MI at 255 ° C of 4 { [η] = 1.0, a MP determined by measurement with DSC ( at a scanning speed of 20 C ) of 250 ° C }, a saponified product of an ethylene - vinyl acetate copolymer having an ethylene content of 32 mol%, a saponification degree of 99.5 mol% and a MI at 255 ° C of 6 ( MP: 181 ° C, moisture content: 1000 ppm, containing no irregularly polymerized or degraded matters ) and a modified polyester resin bonded with aluminum atoms in an amount of 450 ppm and with benzoic acid { MI at 255 ° C: 25, MP: 105°C, and E(TR) measured at 35 ° C: 1500 kg/cm² } described in JPA 115327/1984 were separately extruded from three extruders, supplied while adjusting the discharging timing to a die for molding a tube comprising 5 layers of 3 different resins, the temperatures of the die and its entrances being 245 C, and 280 ° C ( PET ), 250 ° C (EVOH ) and 230 ° C ( TR ) respectively. The tube was formed at a rate of 5 m/min and had an outer diameter of about 25 mm and a length of 75 mm. The tube was prepared by the manufacturing process shown in Figure 5.

### Extrusion conditions for PET:

As the extruder 1 -A, an extruder of the high kneading and low heat generation type, equipped with a cooling device on the delivery part of its metering zone was used.

A thermogenizer ( for cooling ) was mounted onto the polymer passage 2-A.
The variation of the output was ± 1.5 % or below.
The variation of the extrusion temperature was ± 2 ° C or below.
The variation of the extrusion pressure was ± 2 % or below.

### Extrusion condition for EVOH:

As the extruder 1 - B, an extruder of the high kneading and low heat generation type which does not form stagnation was used.

A thermogenizer ( for cooling ) was mounted onto the polymer passage 2 - B.

The rate of shear at the metering zone was: = 50 sec⁻¹.

The flow passage surface was plated with hard chromium and finished to specular gloss.

The average flow rate of EVOH in the die was 1.2 cm/sec or higher.

The rate of shear of EVOH in the die was 5 sec⁻¹.

Both the polymer passages 2 - A ( PET ) and 2 - B ( EVOH ) were eqipped with purging valves.

A die of the confluence system given in Figure 7(3) was employed as the co-extrusion die shown in Figure 5. The die for the extrusion of the 5 layered structure of 3 resins was assembled utilizing spigot joints and dowel pins, and the gauges of the slits for discharging the resins were checked over their entire circumference and adjusted to a tolerance of 50 µm or below for PET, 30 µm or below for the adhesive resin, 20 µm or below for EVOH. The average gauge of each slit was adjusted to 2 mm, 1 mm and 1 mm for PET, EVOH and the adhesive resin respectively. The adjustment was done by adjusting bolts for the mandrel position mounted on the die.

After purging all polymer passages and the inside of the die with nitrogen prior to charging the polymers, extrusion was performed starting with TR.

The melts extruded from the die were introduced through a sizing device 5 shown in Figure 5 (vacuum sizing device cooled externally ) and a cooling tank 6 ( atmospheric pressure ), taken up by a take - up apparatus 7 (top and bottom belts type ), and cut with a cutter 8 to the desired lengths to give tubes having an outer diameter of about 25 mm.

The cross sections of the tubes thus obtained were checked with a microscope for the thickness of each layer, and the thicknesses were adjusted, in the course of molding by corresponding adjusting bolts to such a degree that the thickness nonuniformities fell within acceptable ranges of this invention. Any change of extrusion conditions was done gradually so as to prevent abrupt pressure changes in the die.

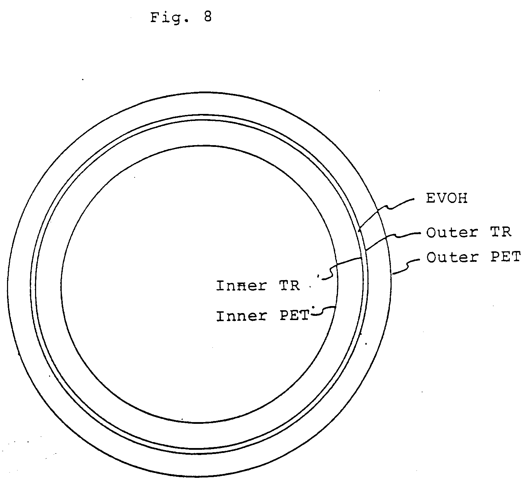

A cross section of the tube comprising PET as the inner and outer layers, EVOH as the intermediate layer and adhesive resin layers between these two resin layers is shown in Figure 8. The thicknesses measured for each layer of the obtained tube are shown in Table 1.

The tube comprising 5 layers of 3 different resins was cut into 1 cm pieces from which the EVOH layers were removed. After removing the adhesive resin sticking to the surface of the EVOH specimens by swelling with acetone, and drying, the EVOH layers were measured for minute thickness nonuniformities. The difference in thickness between any two points on the circumference of each of the two cut surfaces (cross sections) which were not less than 100 µm and not more than 500 µm apart from each other was found to satisfy the following condition:

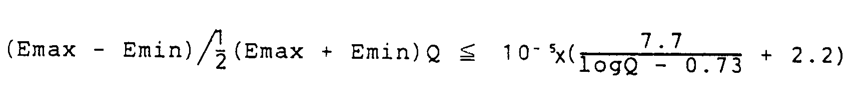

The tube also satisfied the tube construction conditions of the formulae I - ① to I - ③, II, and IV - ①to ⑬.

The tube was made into a preform by forming a mouth and a bottom on both ends using a laboratory preform molding machine ( LM-01, LM-02 ) made by KRUPP CORPOPLAST. The preform was then heated to 100°C and subjected to biaxial blow molding using a laboratory blow molding machine made by the same company at a drawing ratio of 10 ( axial drawing ratio x radial drawing ratio ) to give a bottle having a capacity of 0.5 I, a height of 17.5 cm and an outer diameter of 72 mm0.

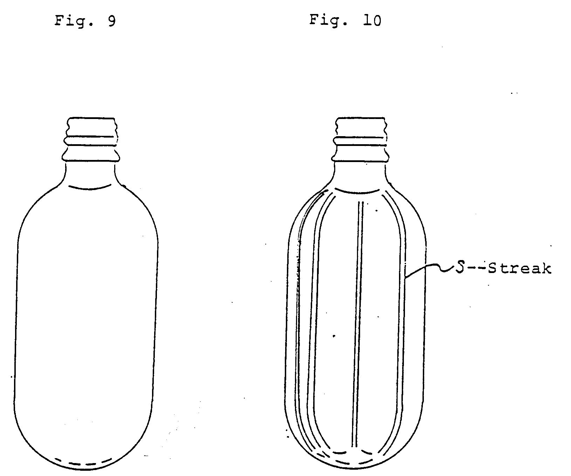

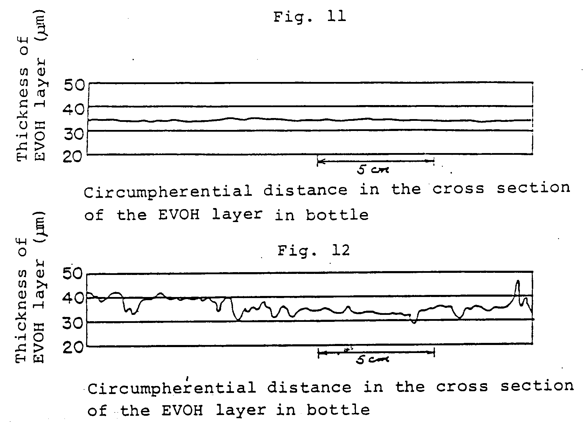

The thus obtained bottle was, as shown in Figure 9, of pleasant appearance having substantially no streaks. The average thickness construction of the layers of the bottle body is shown in Table 5. The lateral thickness distribution in the EVOH layer removed from the bottle body was as shown in Figure 11 and shows no thickness irregularity compared to Comparative Example 1 ( Figure 12 ) and no streaks at all which would detract from the bottle appearance. The thickness distribution was measured using a continuous film thickness tester made by ANRITSU ELECTRIC.

### Example 2

A polyester resin having copolymerized 3.5 mol% of 1,4-cyclohexanedimethanol ([η] = 1.15, a MI at 255 ° C of 1.5 and a MP of 245 ° C ), a saponified product of an ethylene - vinyl acetate copolymer having an ethylene content of 44 mol% and a saponification degree of 99.4 mol% ( MI at 255 ° C of 6.0, MP: 164 ° C ) and a modified polyester resin bonded with aluminum atoms in an amount of 450 ppm and with benzoic acid ( MI at 255 ° C: 30, MP: 105 ° C ) described in JPA 115327/1984 are separately extruded from three extruders at temperatures of 270 ° C, 240 ° C and 220 ° C respectively to a die for tube molding shown in Figure 7(2) ( die temperature: 245 ° C ). The resins are subjected to co - extrusion molding, followed by vacuum sizing, cooling, taking up and cutting at a rate of 4.0 m/min to give tubes having an outer diameter of about 25 mm and a length of 75 mm.

The assembling and adjustment of the die was carried out in the same manner as in Example 1 so that the gauges of the slits for discharging the resins were adjusted on the entire circumferences to tolerances of not more than 40 µm, not more than 20 µm and not more than 20 µm for PET, EVOH and the adhesive resin respectively by adjusting bolts for the mandrel position mounted on the die. The average gauge of each slit was adjusted to 2 mm, 1 mm and 1 mm for PET, EVOH and the adhesive resin respectively. During the operation any change in the operating conditions was made gradually in order that the pressure inside the die would not change abruptly. The extrusion conditions for PET, EVOH and TR were the same as in Example 1 except for the extrusion temperature. The polymer passages 2 - A, 2 - B and 2-C were provided with purging valves and each polymer was discharged through it until a smooth extrusion was obtained. After the extrusion of each resin became steady, the purging valves were switched over successively to introduce TR, EVOH and PET in sequence at an appropriate timing into the die.

The cross sections of the thus obtained tubes showed, same as Figure 8 in Example 1, only small nonuniformities in thickness. The results are shown in Table 1.

The EVOH layers in the 1 cm specimens cut from the tubes were checked for thickness nonuniformity in the same manner as in Example 1. The difference in thickness between any two points on the circumference of each of the two cut surfaces ( cross sections ) which were not less than 100 µm and not more than 500 µm apart from each other was found to satisfy the condition II.

The tube was made into a preform using the laboratory machine described in Example 1, and the preform was then molded into a blown bottle at a drawing ratio of 10 and at 95 C. The bottle obtained had a capacity of 0.5 I, a height of 17.5 cm and an outer diameter of 72 mm, and showed substantially no streaks detracting from the appearance of the bottle. Although the composition of PET and EVOH resins was different from those of Example 1, the proper selection of the resin viscosities and attention paid to consolidating the die and the change in the operating conditions led to a tube suitable for molding a bottle having an excellent appearance.

### Examples 3 to 9

One of the PES resins of the same type as in Example 2 having MI's given in Table 1 and Table 2, EVOH ( MP: 179 C ) having an ethylene content of 33 mol% and a saponification degree of 99.5 mol% and an adhesive resin ( a modified polyester resin bonded with aluminum atoms in an amount of 450 ppm and with benzoic acid, described in JPA 115,327/84; MP: 105°C) were extruded using 3 extruders at temperatures of 270 ° C, 250 ° C and 230 ° C respectively and passed to a die having the structure of Figure 7(3) to be molded into tubes having 5 layers of 3 different materials.

Assembling and operation were done in a similar manner to those in Example 2. The extrusion conditions for PET, EVOH and TR were nearly the same as in Example 1 except for the temperatures. The result of the moldings are summarized in Tables 1 and 2. The thickness nonuniformity between any two points on the circumference of an EVOH layer ( cross section cut at 1 cm intervals ) which were 100 µm to 500 µm apart from each other satisfied the condition II.

The tubes obtained were molded using the blow molding machine described in Example 1 ( drawing ratio: 10, at 105 C) into bottles having a capacity of 0.5 I, a height of 17.5 cm and a diameter of 72 mm.

The bottles thus obtained showed substantially no streaks which would spoil the appearance.

The constructions of the tubes and bottles obtained in Examples 1 to 9 are shown in Tables 1 and 2.

### Comparative Example 1

The same raw material chips as in Example 1 were subjected to tube molding, but the extrusion conditions for each resin and the order of introducing the resins into the die were changed.

Each resin was first discharged just upstreams of the 3 materials/5 layer die, and when the extrusion states became stable, the resins were introduced into the die in the order of PET, high-viscosity EVOH and TR by switching the valves. The introduction of the resins was timed as follows: After confirming the discharge of a resin from the front of the die, the valve for the next resin was switched over. For the tube molding, a die having a system of Figure 7(3), which is also shown in Figures 6 - (1) and - (2), was used. The assembling of the die and the adjustments of the die slits were made in the same way as in Example 1.

The extrusion of each resin was done in the same manner as in Example 1, except that the extrusion temperature for PET was 295 ° C, the extrusion temperature for EVOH was 295 ° C and the rate of shear of EVOH in the metering zone of the extruder and that in the die were 18 sec1 and 21 sec⁻¹ respectively, and the extrusion temperature for TR was 180 C.

The EVOH layer removed from the tube obtained showed a number of streaky thickness nonuniformities in a direction parallel to the tube axis.

The EVOH layer ( cross sections cut at 1 cm intervals), there were observed not less than 13 spots in one cross section, and not less than a total of 26 spots in two cross sections. Thus this thickness nonuniformity between 2 points, 100 µm to 500 µm apart from each other, does not satisfy the condition II.

The tubes were molded with a machine described in Example 1 into preforms, which were then subjected to biaxial blow molding to give bottles having a capacity of 0.5 I. All of the bottles thus obtained, showed: clearly distinguishable streaks (S): 8 on average/bottle slightly distinguishable streaks : many and the bottle appearance was unappealing ( Figure 10 ). A bottle was selected at random from these bottles. The EVOH layer was removed and measured for its thickness distribution using the before-described continuous thickness tester. The result is shown in Figure 12. About 8 spots were found to show big difference in thickness and were thought to produce distinct streaks in the bottle.

These streaks could not be prevented, although various adjustments in blow molding conditions were made to find the most suitable blowing condition. On the contrary, some adjustments resulted in an increase in streaks. From the above it can be understood that for obtaining bottles having no streaks it is important to prepare tubes having no streaks and also to use molding techniques of a high level.

### Comparative Examples 2 to 6

A PES having an [η] different from that in Example 1, a saponified product of an ethylene - vinyl acetate copolymer (EVOH ) having an ethylene content of 32 mol% and a saponification degree of 99.5 mol%, and an adhesive resin of similar kind to that in Example 2 were molded together into tubes with 5 layers of 3 different resins, the EVOH being the intermediate layer. The procedure was the same as in Example 1, except that at least one of the three resins had a MI at 250 ° C deviating from the preferred range. The results are shown in Table 3. The MI's of the resins used in each one of the Comparative Examples were as shown in Table 3: MI of EVOH in Comparative Example 2, MI's of EVOH and PET in Comparative Example 3, MI's of EVOH, PET and TR in Comparative Example 4, MI of TR in Comparative Example 5 and MI's of PET in Comparative Example 6 were not in the preferred range respectively. The EVOH layer was removed from each one of the tubes obtained and the cross sections cut at 1 cm intervals were checked with a micrometer. Among the thickness nonuniformities between any two points 100 µm to 500 µm apart from each other, there were found not less than 4 spots in one cross section, and not less than 8 spots in two cross sections. Thus the number of these spots exceeds the maximum thickness-nonuniformity of condition II.

These tubes were molded into preforms using a machine described in Example 1, followed by biaxial blow molding to give bottles having a capacity of 0.5 I. Each bottle, showed no less than 4 distinct streaks and a number of slightly distinguishable small streaks. The appearance of the bottles were as bad as that in Comparative Example 1 which is illustrated in Figure 10. Any change in the blow molding conditions could not lead to obtaining a bottle having good appearance and having substantially no streaks.

From the above it can be seen that for obtaining bottles having no streaks it is important to prepare tubes having no streaks, and that for getting a tube having no streaks it is important that the MI of each starting resin falls in a preferred range, and to use a superior molding technique.

The constructions of the tubes and bottles obtained in Comparative Examples 1 to 6 are shown in Tables 3 and 4.

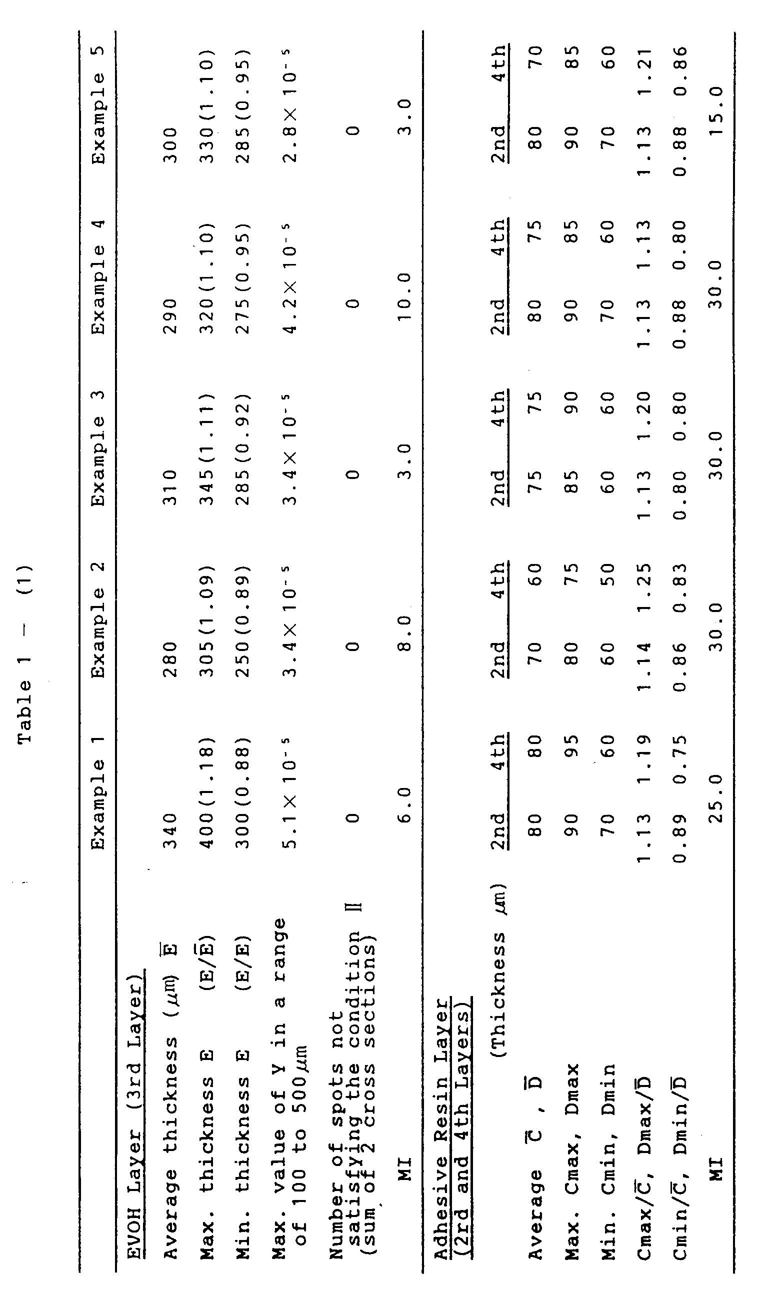

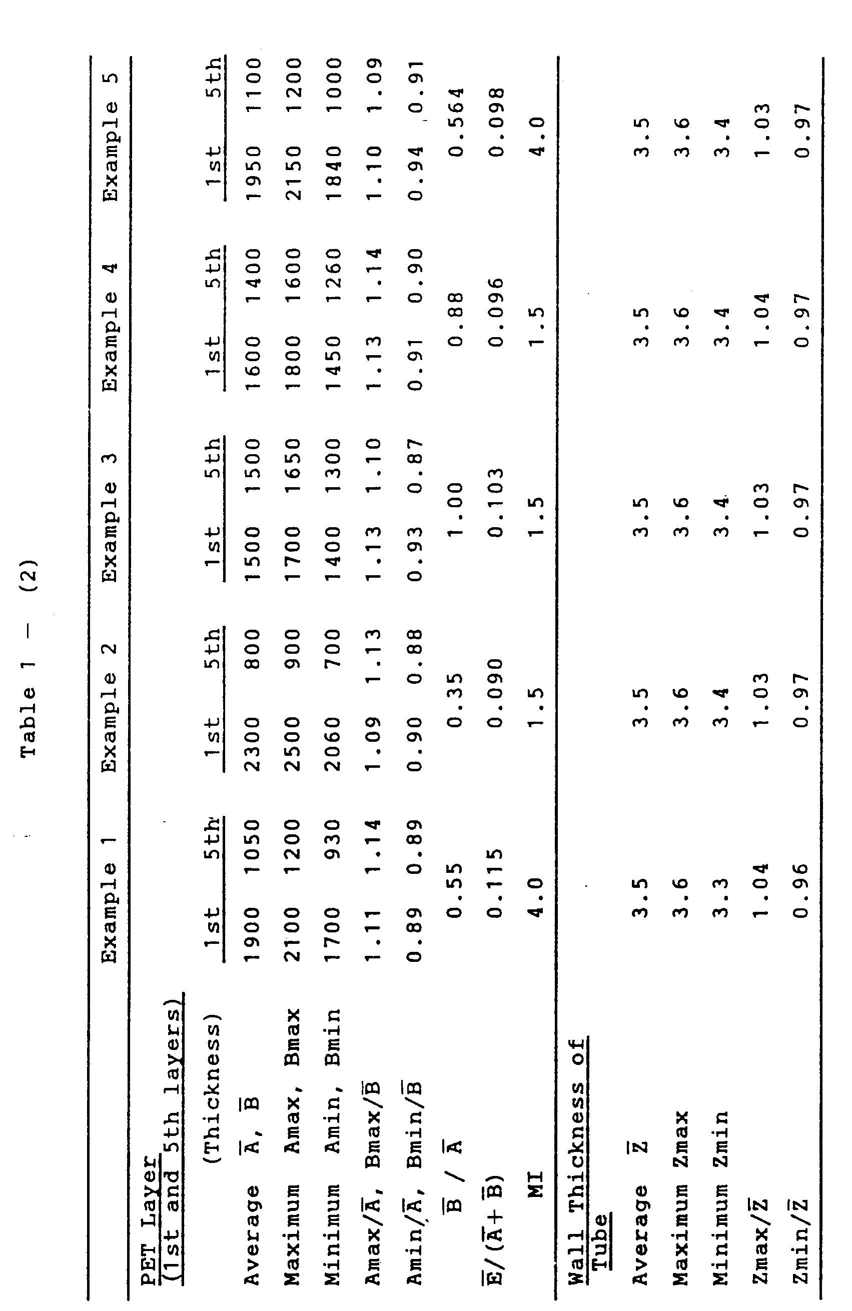

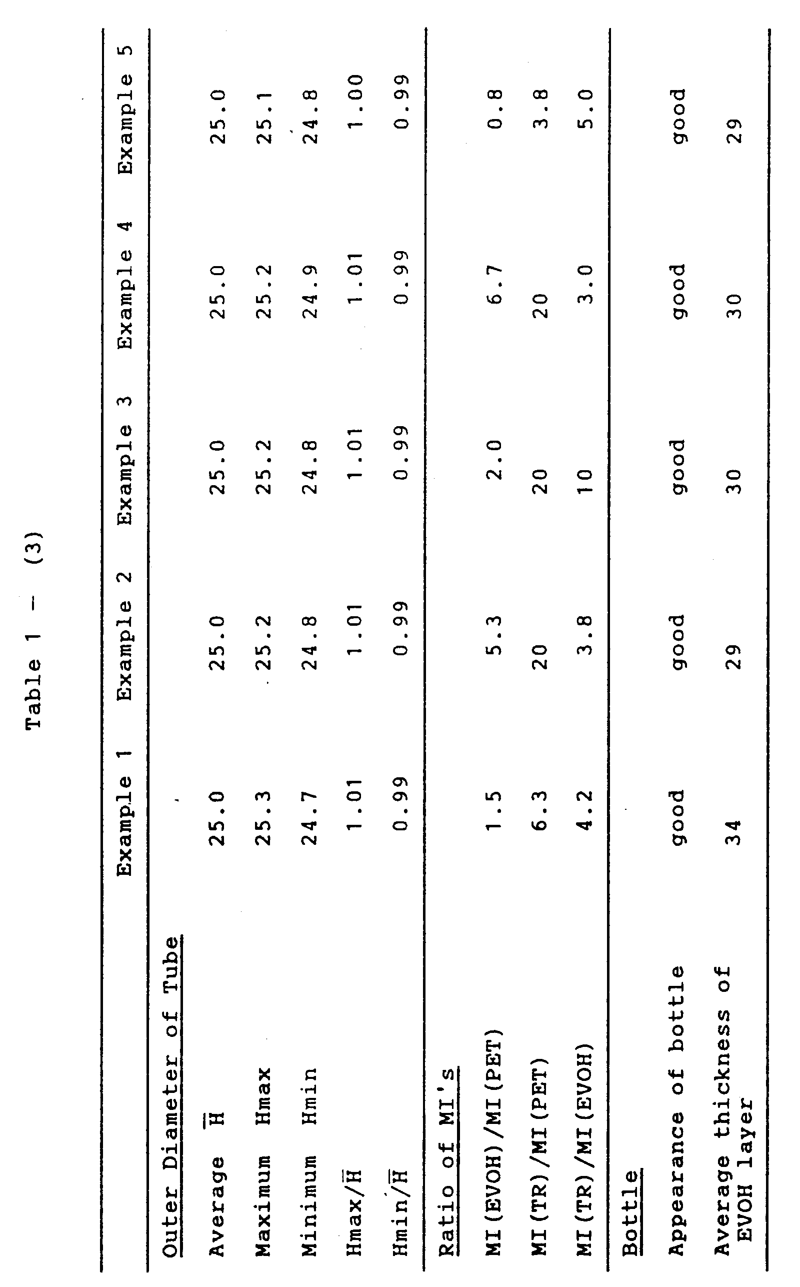

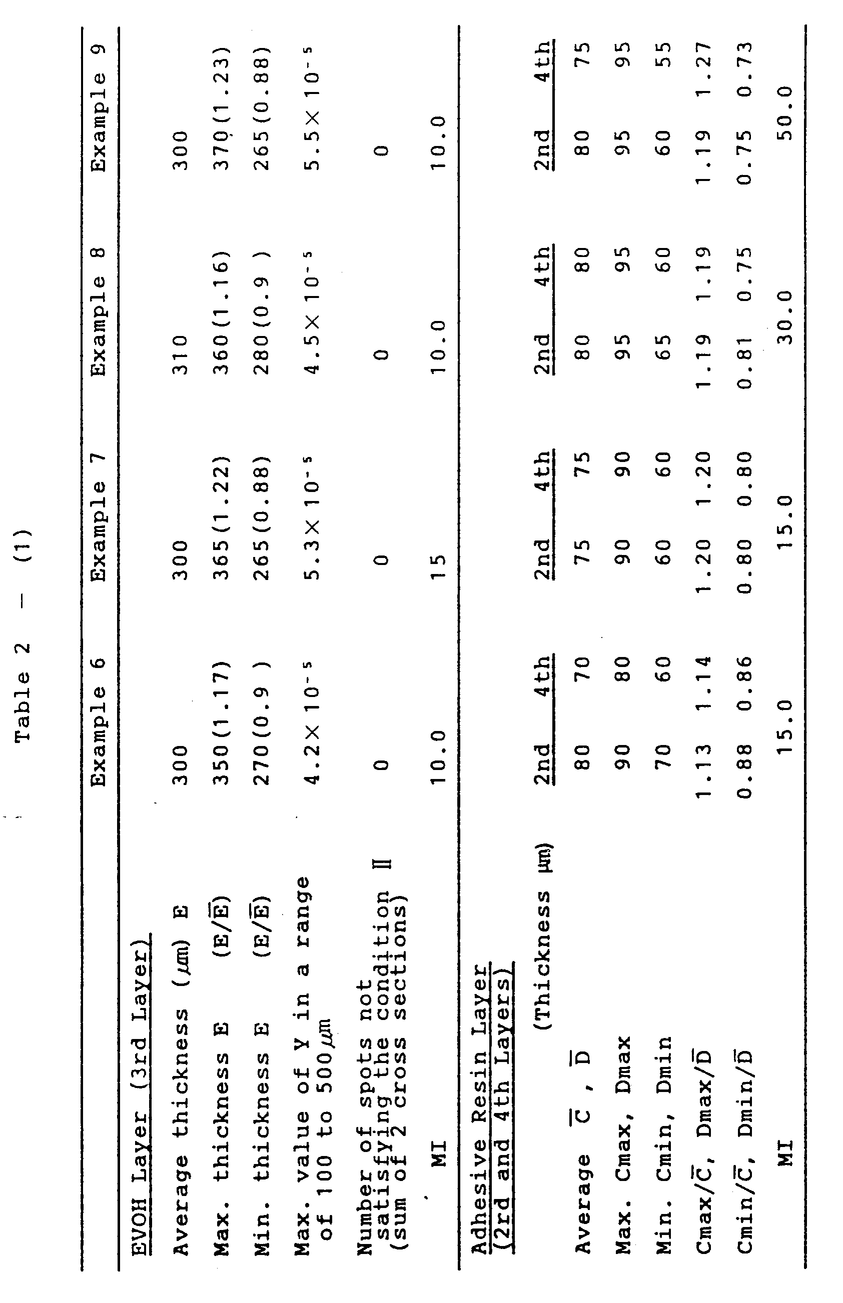

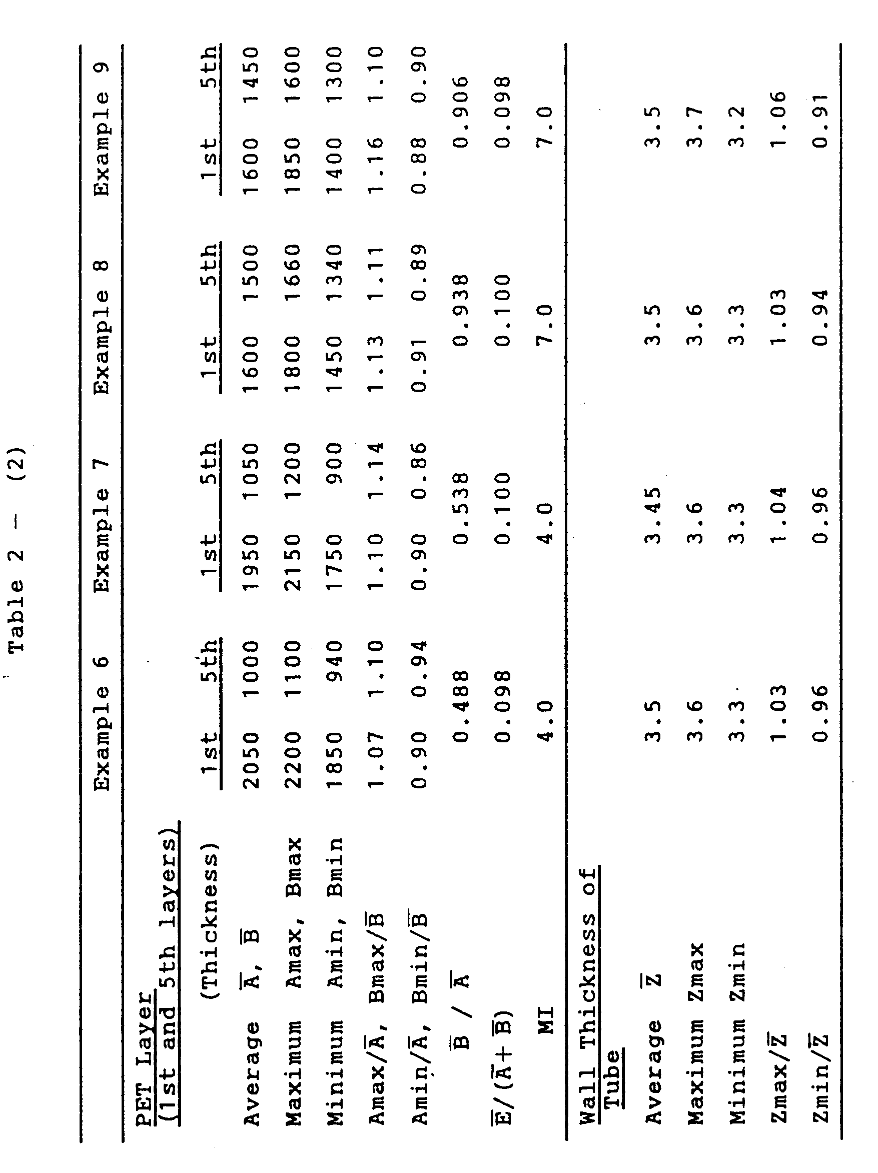

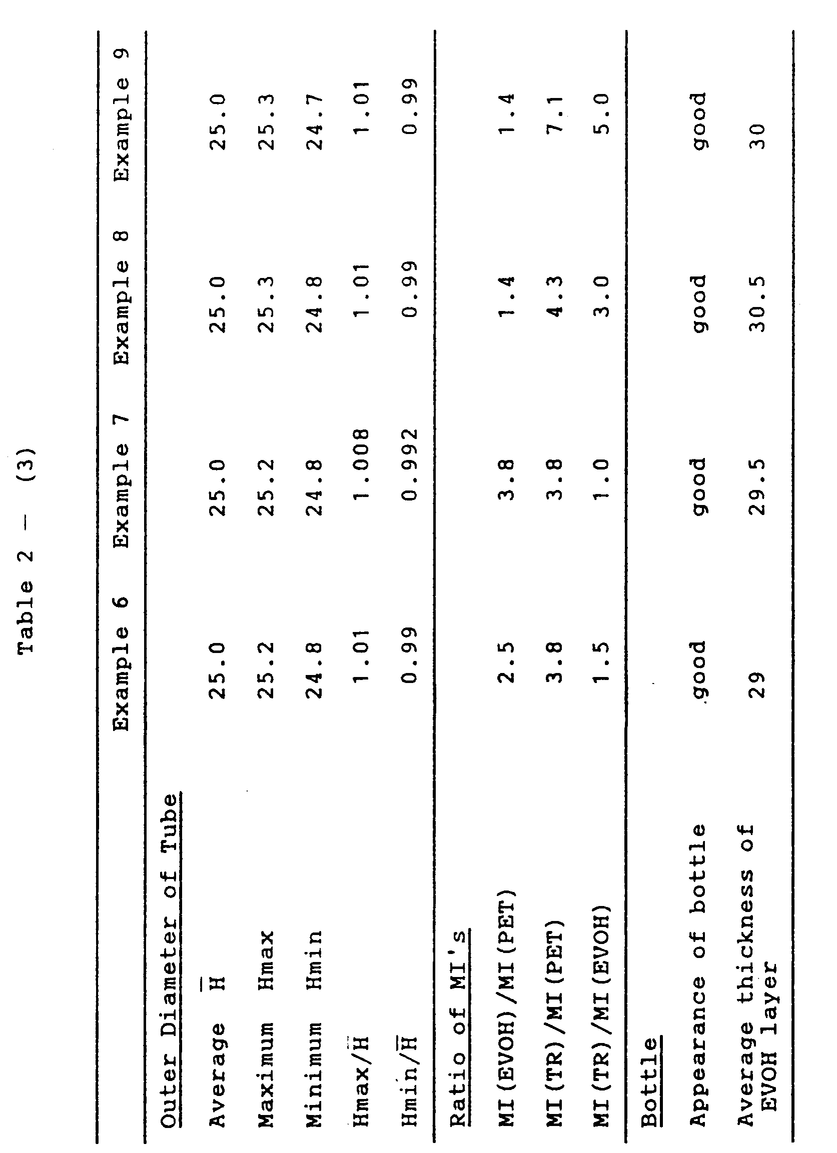

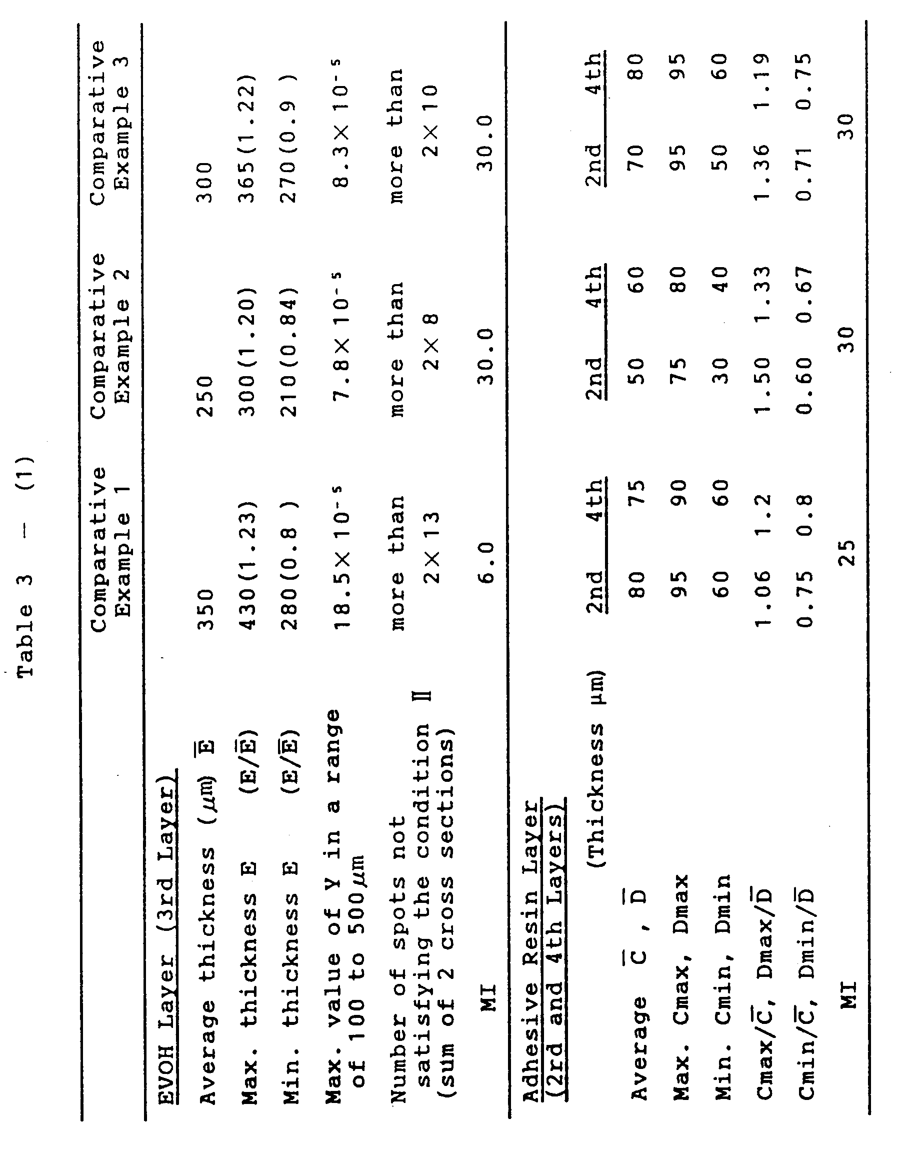

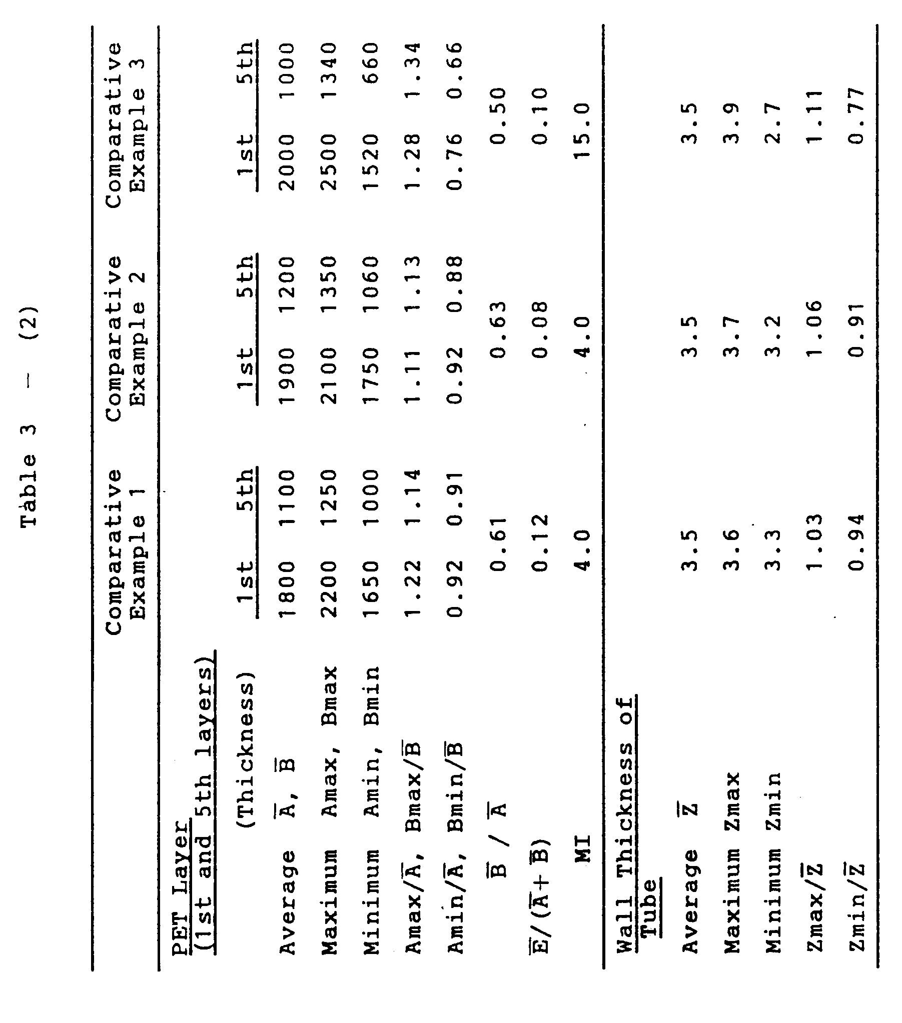

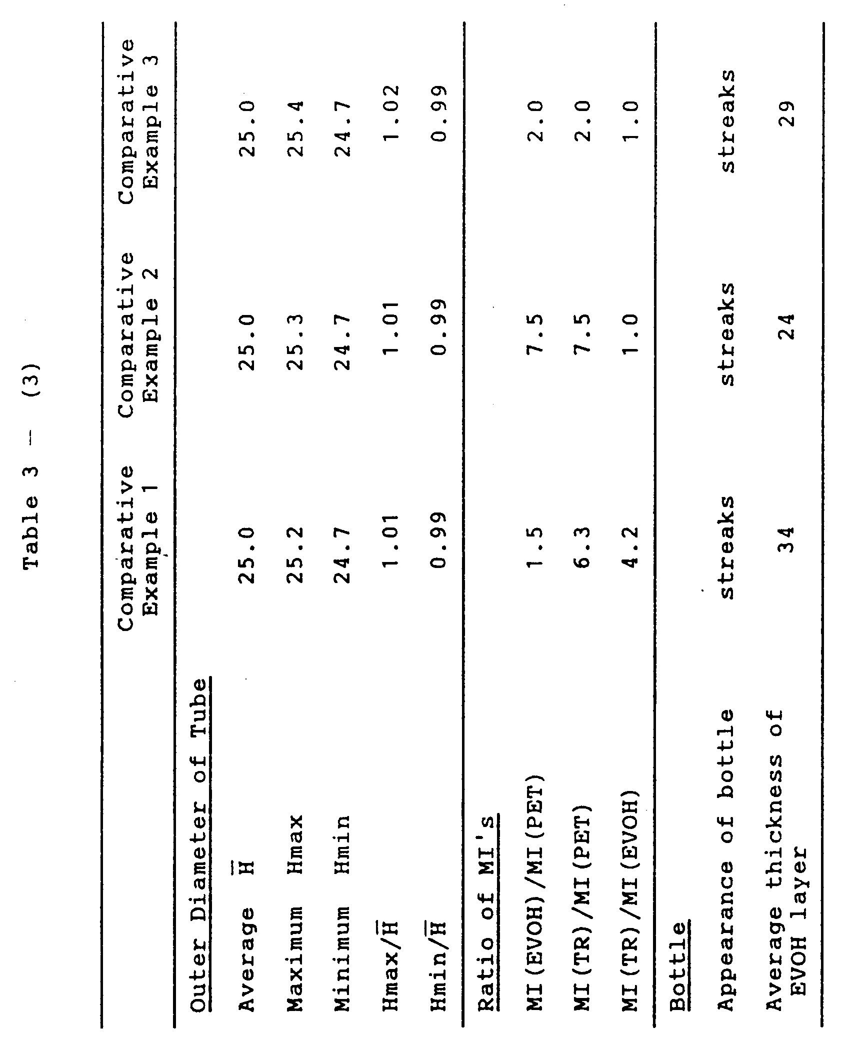

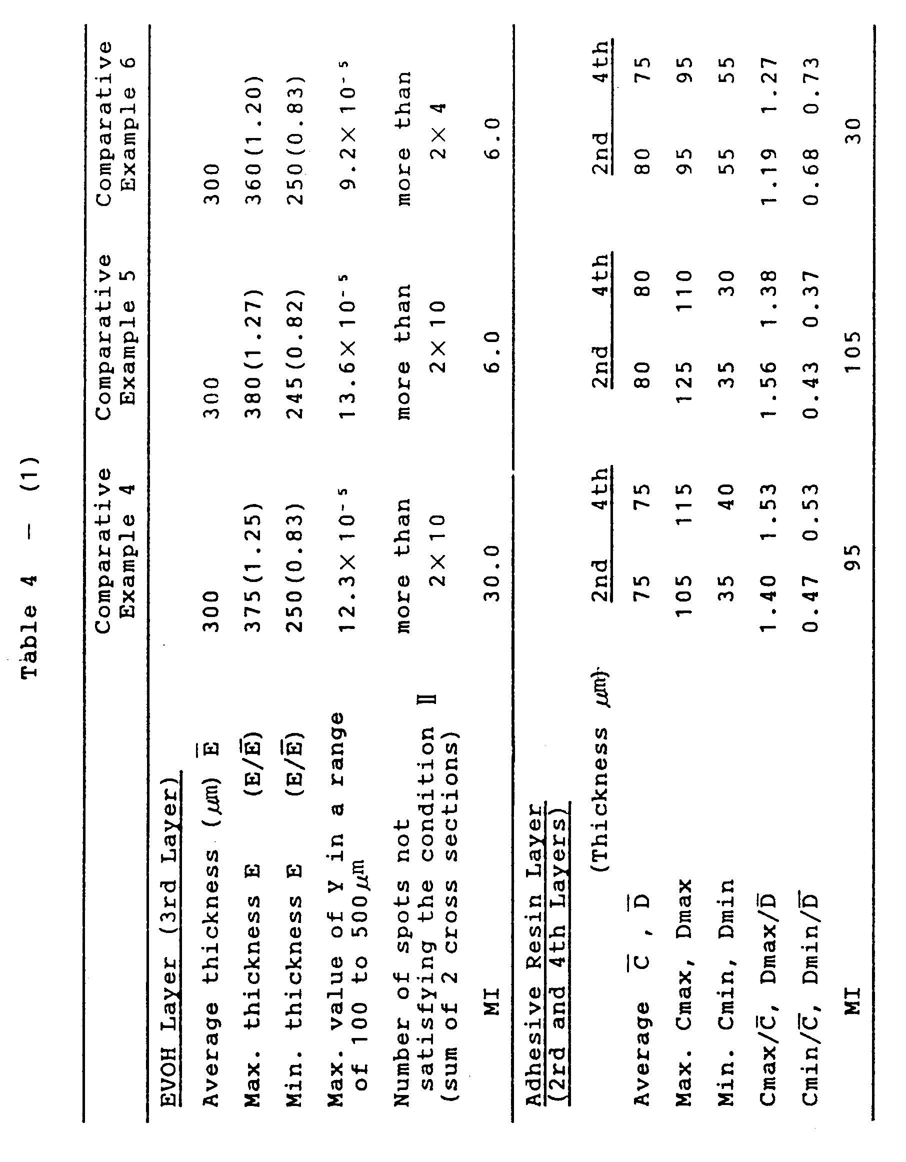

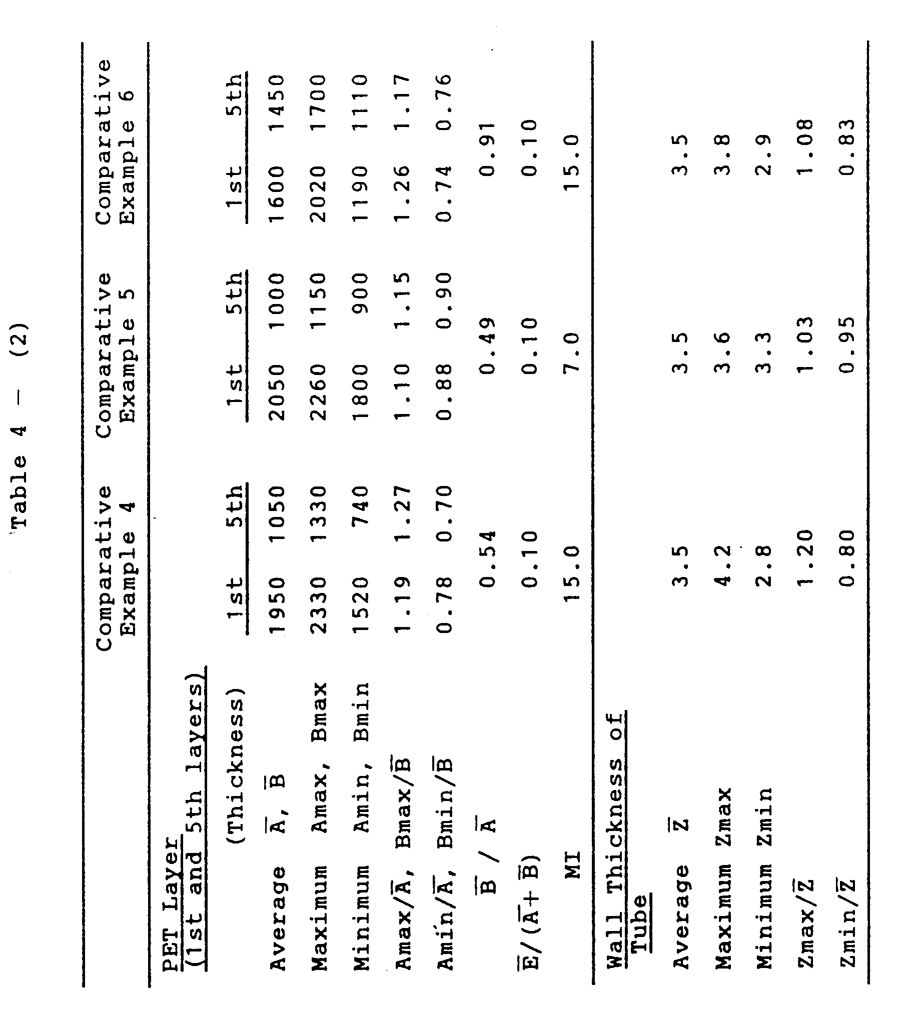

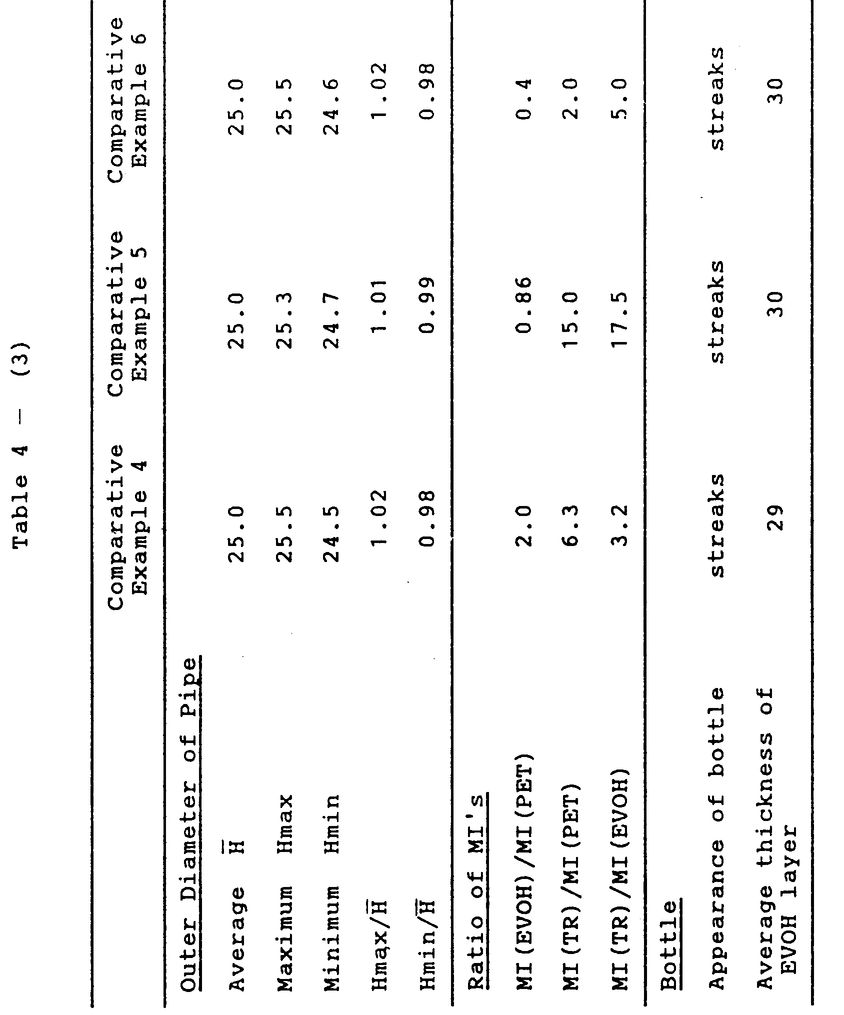

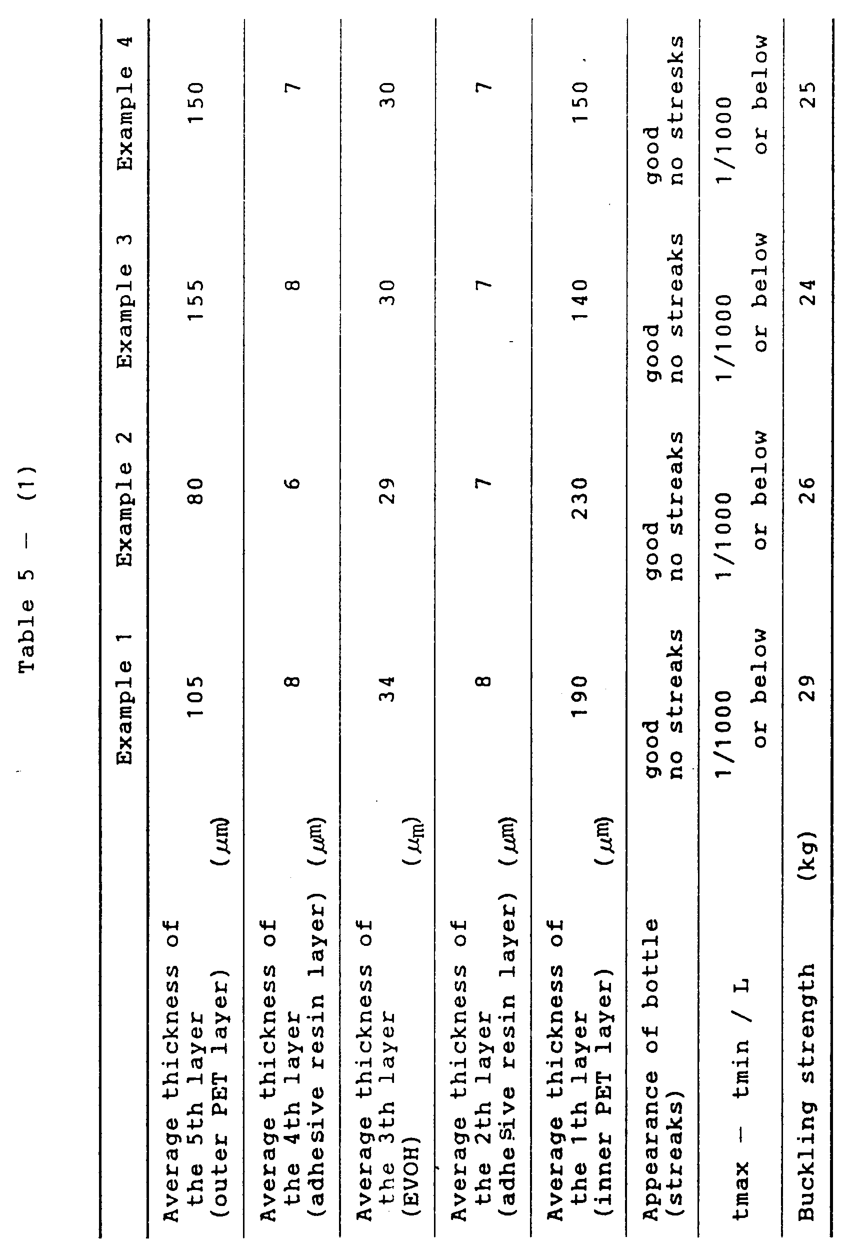

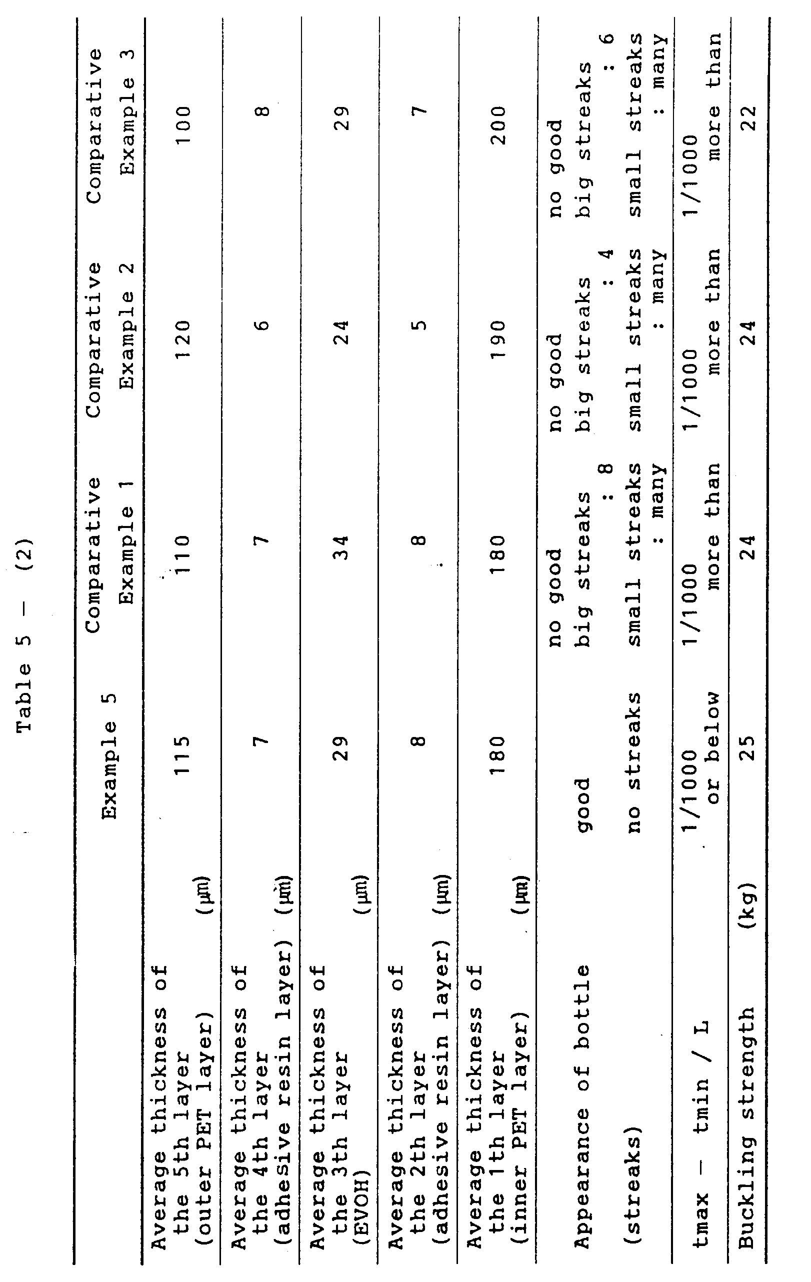

## Claims

1. A multilayered tube for draw molding, which comprises a saturated polyester as the inner and outer layers, a saponified product of an ethylene-vinyl acetate copolymer, and an adhesive resin layer interposed between the saturated polyester layer and the saponified product of the ethylene-vinyl acetate copolymer layer; characterized in that the saponified product of the ethylene-vinyl acetate copolymer has an ethylene content of 20 to 55 mol% and a saponification degree of the vinyl acetate component of at least 96 mol% and the tube satisfies the conditions of the following formulae I - ① to I - ③: 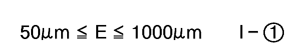 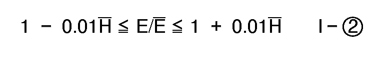 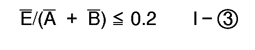 wherein,
E is the wall thickness at any point of the layer of the saponified product of the ethylene - vinyl acetate copolymer (µm)
E is the average wall thickness of the layer of the saponified product of the ethylene-vinyl acetate copolymer (µm)
H is the average outer diameter of the tube (mm)
A̅ is the average wall thickness of the inner layer of the saturated polyester (µm)
B is the average wall thickness of the outer layer of the saturated polyester (µm); and in which the layer of the saponified product of the ethylene-vinyl acetate copolymer substantially satisfies the following formula II: 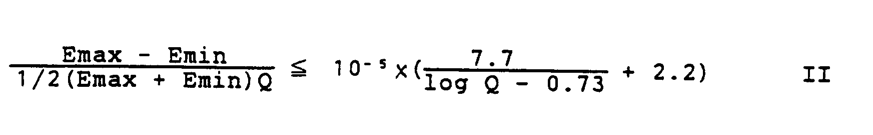 wherein:
Emin is the minimum wall thickness (µm) of the layer of the saponified product of the ethylene-vinyl acetate copolymer, determined in the cross section perpendicular to the direction of the tube length, between any two points Pₙ and Pₙ₊₁ which have a circumferential distance Q = 100 to 500 µm from each other measured at the outer surface of the layer;
Emax is the maximum wall thickness (µm) of the above specified region between Pₙ and Pₙ₊₁.

A multilayered tube used for draw molding according to Claim 1, wherein the following conditions III - ① to III - ⑨ are satisfied. 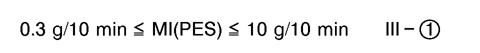 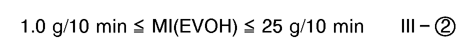 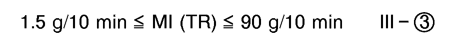 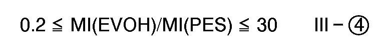 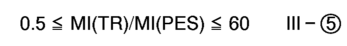 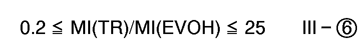 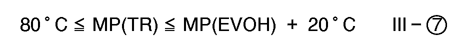 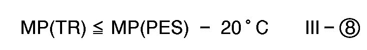 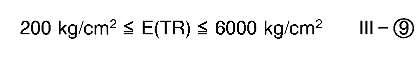 wherein:
MI is the melt flow index ( g/10 min ) measured at a temperature 5 ° C higher than the melting point of the saturated polyester,
PES is the saturated polyester,
EVOH is the saponified product of the ethylene - vinyl acetate copolymer
TR is the adhesive resin
MP is the melting point
E is the Young's modulus.

3. A method of producing a multilayered container, which comprises preparing a preform from a multilayered tube for blow molding, by providing a saturated polyester as the inner and outer layers, a saponified product of an ethylene-vinyl acetate copolymer and an adhesive resin layer interposed between the saturated polyester layer and the saponified product of the ethylene-vinyl acetate copolymer layer; and by subjecting said preform to biaxial blow molding characterized in that the saponified product of the ethylene - vinyl acetate copolymer has an ethylene content of 20 to 55 mol% and a saponification degree of the vinyl acetate component of at least 96 mol%, and the tube satisfies the conditions of the following formulae I - ① to I - ③ : 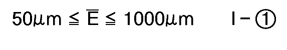 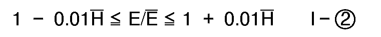 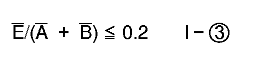 wherein,
E is the wall thickness at any point of the layer of the saponified product of the ethylene - vinyl acetate copolymer (µm)
E is the average wall thickness of the layer of the saponified product of the ethylene-vinyl acetate copolymer (µm)
H is the average outer diameter of the tube (mm)
A̅ is the average wall thickness of the inner layer of the saturated polyester (µm)
B is the average wall thickness of the outer layer of the saturated polyester (µm);
and in which the layer of the saponified product of the vinyl acetate copolymer substantially satisfies the following formula II: 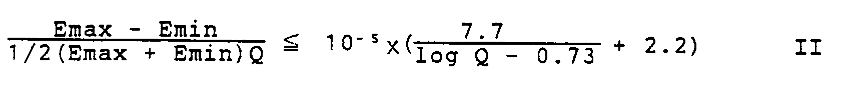 wherein:
Emin is the minimum wall thickness (µm) of the layer of the saponified product of the ethylene - vinyl acetate copolymer, determined in the cross section perpendicular to the direction of the tube length, between any two points Pₙ and Pₙ₊₁ which have a circumferential distance Q = 100 to 500 µm from each other, measured at the outer surface of the layer;
Emax is the maximum wall thickness (µm) of the above specified region between Pₙ and Pₙ₊₁;

## Patentansprüche

1. Mehrschichtiges Rohr für das Formziehen, umfassend einen gesättigten Polyester als Innen - und Außenschichten, ein Verseifungsprodukt eines Ethylen - Vinylacetat - Copolymers und eine Klebeharz - schicht angeordnet zwischen der Schicht von gesättigtem Polyester und der Schicht aus dem Verseifungsprodukt des Ethylen - Vinylacetat - Copolymers, dadurch gekennzeichnet, daß das Versei - fungsprodukt des Ethylen - Vinylacetat - Copolymers einen Ethylengehalt von 20 bis 55 Mol - % und einen Verseifungsgrad des Vinylacetatbestandteils von mindestens 96 Mol - % aufweist und das Rohr den Bedingungen der nachstehenden Formeln I - ① bis I - ③ genügt 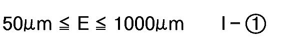 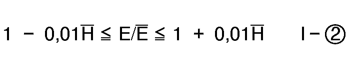 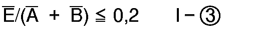 wobei
E die Wandstärke (um) an jedem Punkt der Schicht des Verseifungsprodukts des Ethylen-Vinylacetat - Copolymers ist,
E die durchschnittliche Wandstärke (um) der Schicht des Verseifungsprodukts des Ethylen-Vinylacetat - Copolymers ist,
H der durchschnittliche Außendurchmesser (mm) des Rohrs ist,
A die durchschnittliche Wandstärke (um) der Innenschicht des gesättigten Polyesters ist,
B die durchschnittliche Wandstärke (um) der äußeren Schicht des gesättigten Polyesters ist; und wobei die Schicht des Verseifungsprodukts des Ethylen-Vinylacetat-Copolymers im Wesentlichen der nachstehenden Formel II 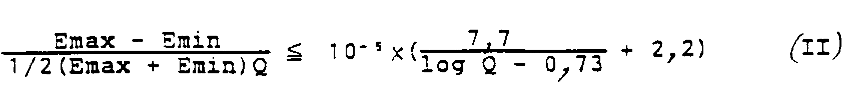 genügt, wobei
Emin die minimale Wandstärke (µm) der Schicht des Verseifungsprodukts des Ethylen - Vinylacetat - Copolymers ist; bestimmt im Querschnitt rechtwinklig zur Richtung der Rohrlänge zwischen zwei beliebigen Punkten Pₙ und Pₙ₊₁, die, gemessen an der äußeren Oberfläche der Schicht, einen umfänglichen Abstand Q = 100 bis 500 um voneinander aufweisen;.
Emax die maximale Wandstärke (µm) des vorstehend angeführten Bereichs zwischen Pₙ und Pₙ₊₁ ist.

Mehrschichtiges Rohr für das Formziehen nach Anspruch 1, wobei die nachstehenden Bedingungen III - ① bis III - ⑨ erfüllt sind: 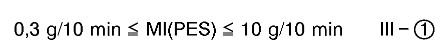 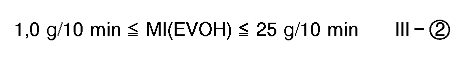 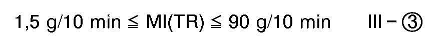 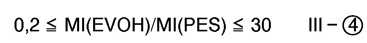 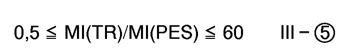 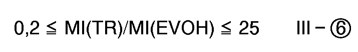 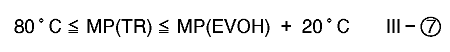 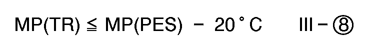 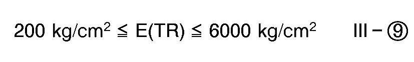 wobei:
MI den Schmelzflußindex (g/10 Minuten), gemessen bei einer Temperatur von 5 ° C über der des Schmelzpunktes des gesättigten Polyesters, bedeutet,
PES den gesättigten Polyester bedeutet,
EVOH das Verseifungsprodukt des Ethylen - Vinylacetat - Copolymers darstellt,
TR das Klebeharz bedeutet,
MP der Schmelzpunkt ist und
E den Young'schen Modul darstellt.

Verfahren zur Herstellung eines mehrschichtigen Behälters, umfassend die Herstellung einer Vorform aus einem mehrschichtigen Rohr zum Blasverformen durch Bereitstellen eines gesättigten Polyesters als Innen - und Außenschichten, eines Verseifungsprodukts eines Ethylen - Vinylacetat - Copolymers und einer Klebeharzschicht, angeordnet zwischen der gesättigten Polyesterschicht und der Schicht aus dem Verseifungsprodukt des Ethylen - Vinylacetat - Copolymers und biaxiales Blasverformen der Vorform, dadurch gekennzeichnet, daß das Verseifungsprodukt des Ethylen-Vinylacetat-Copolymers einen Ethylengehalt von 20 bis 55 Mol - % und einen Verseifungsgrad des Vinylacetatbestandteils von mindestens 96 Mol - % aufweist und das Rohr den Bedingungen der nachstehenden Formeln I - ① bis I - ③ genügt 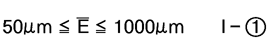 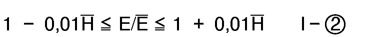 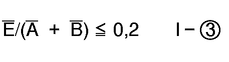 wobei
E die Wandstärke (um) an jedem Punkt der Schicht des Verseifungsprodukts des Ethylen-Vinylacetat - Copolymers ist,
E die durchschnittliche wandstärke (um) der Schicht des Verseifungsprodukts des Ethylen-Vinylacetat - Copolymers ist,
H der durchschnittliche Außendurchmesser (mm) des Rohrs ist,
A die durchschnittliche wandstärke (um) der Innenschicht des gesättigten Polyesters ist,
B die durchschnittliche Wandstärke (um) der äußeren Schicht des gesättigten Polyesters ist; und wobei
die Schicht des Verseifungsprodukts des Ethylen-Vinylacetat-Copolymers im wesentlichen der nachstehenden Formel 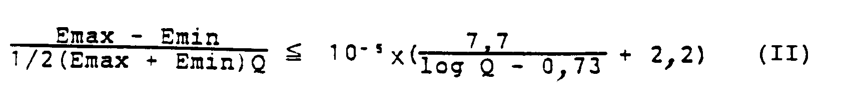 genügt, wobei
Emin die minimale Wandstärke (µm) der Schicht des Verseifungsprodukts des Ethylen - Vinylacetat - Copolymers ist; bestimmt im Querschnitt rechtwinklig zur Richtung der Rohrlänge, zwischen zwei beliebigen zwei Punkten Pₙ und Pₙ₊₁, die, gemessen an der äußeren Oberfläche der Schicht, einen umfänglichen Abstand Q = 100 bis 500 um voneinander aufweisen.
Emax die maximale Wandstärke (µm) des vorstehend angeführten Bereichs zwischen Pₙ und Pₙ₊₁ ist.

## Revendications

1. Tube multi-couche pour moulage par étirage, comprenant en couches intérieure et extérieure un polyester saturé, un produit saponifié de copolymère d'acétate d'éthylène vinyl et une couche à base de résine adhésive interposée entre la couche de polyester saturée et le produit saponifié de la couche de copolymère d'acétate d'éthylène vinyl; caractérisé en ce que le produit saponifié du copolymère d'acétate d'éthylène vinyl présente une teneur molaire en éthylène comprise entre 20 et 55 % en mol et un degré de saponification du composant à base d'acétate de vinyl d'au moins 96 % en mol, et que le tube satisfait aux conditions des formules suivantes I - 1 à I - 3 : 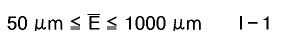 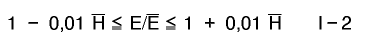 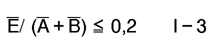 dans lesquelles,
E est l'épaisseur de paroi en un point quelconque de la couche de produit saponifié du copolymère d'acétate d'éthylène vinyl (µm)
E est l'épaisseur de paroi moyenne de la couche de produit saponifié du copolymère d'acétate d'éthylène vinyl (µm)
H est le diamètre extérieur moyen du tube (mm)
A̅ est l'épaisseur de paroi moyenne de la couche intérieure du polyester saturé (µm)
B̅ est l'épaisseur de paroi moyenne de la couche extérieure du polyester saturé (µm); et dans laquelle la couche de produit saponifié de copolymère d'acétate d'éthylène vinyl satisfait pratiquement à la formule Il suivante : 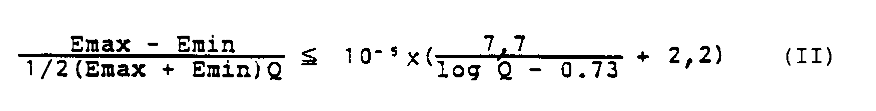 dans laquelle :
Emin est l'épaisseur de paroi minimale (µm) de la couche du produit saponifié du copolymère d'acétate d'éthylène vinyl déterminée dans la section transversale perpendiculaire à la direction de la longueur de tube, entre des points quelconques Pₙ et Pₙ₊₁, à une distance circonférentielle Q = 100 à 500 µm l'un de l'autre, mesurée sur la surface extérieure de la couche;
Emax est l'épaisseur de paroi maximale (µm) de la zone spécifiée ci-dessus, entre Pₙ et Pₙ₊₁.

2. Tube multi - couche utilisé pour moulage par étirage selon la revendication 1, dans laquelle les conditions suivantes III - 1 à III - 9 sont remplies: 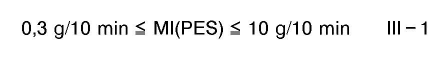 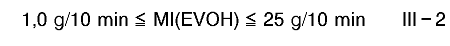 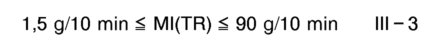 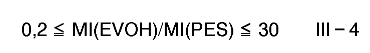 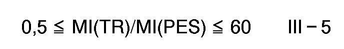 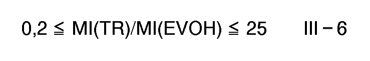 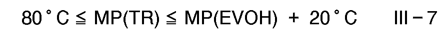 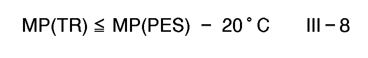 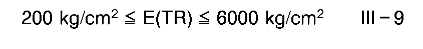 Dans laquelle,
MI est l'indice de fusion (g/10 min) mesuré à une température 5 C plus élevée que le point de fusion du polyester saturé,
PES est le polyester saturé,
EVOH est le produit saponifié du copolymère d'acétate d'éthylène vinyl,
TR est la résine adhésive,
MP est le point de fusion,
E est le module de Young.

3. Procédé de préparation d'un récipient multi-couche, comprenant la préparation d'une préforme à partir d'un tube multi-couche en vue d'un moulage par soufflage, en utilisant un polyester saturé pour les couches intérieures et extérieures, un produit saponifié à base d'un copolymère d'acétate d'éthy - lène vinyl et une couche de résine adhésive interposée entre la couche de polyester saturée et le produit saponifié constitué d'une couche de copolymère d'acétate d'éthylène vinyl et en soumettant ladite préforme à un moulage par soufflage biaxiale, caractérisé en ce que le produit saponifié du copolymère d'acétate d'éthylène vinyl présente une teneur en éthylène comprise entre 20 et 55 % en mol et un degré de saponification du composant à base d'acétate de vinyl d'au moins 96 % en mol et que le tube satisfait aux conditions des formules suivantes 1 - 1 à 1 - 3: 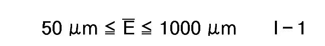 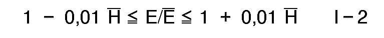 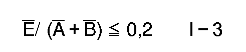 dans lesquelles,
E est l'épaisseur de paroi en un point quelconque de la couche de produit saponifié du copolymère d'acétate d'éthylène vinyl (µm)
E est l'épaisseur de paroi moyenne de la couche de produit saponifié du copolymère d'acétate d'éthylène vinyl (µm)
H est le diamètre extérieur moyen du tube (mm)
À̅ est l'épaisseur de paroi moyenne de la couche intérieure du polyester saturé (µm)
B̅ est l'épaisseur de paroi moyenne de la couche extérieure du polyester saturé (µm); et dans laquelle la couche de produit saponifié de copolymère d'acétate d'éthylène vinyl satisfait pratiquement à la formule Il suivante : 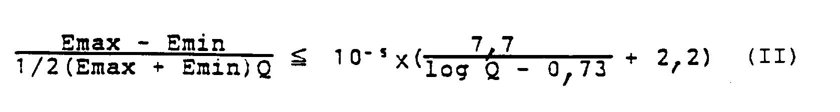 dans laquelle :
Emin est l'épaisseur de paroi minimale (µm) de la couche du produit saponifié du copolymère d'acétate d'éthylène vinyl déterminée dans la section transversale perpendiculaire à la direction de la longueur de tube, entre des points quelconques Pₙ et Pₙ₊₁, à une distance circonférentielle Q = 100 à 500 µm l'un de l'autre, mesurée sur la surface extérieure de la couche;
Emax est l'épaisseur de paroi maximale (µm) de la zone spécifiée ci-dessus entre Pₙ et Pₙ₊₁.
